(19) Europäisches Patentamt / European Patent Office / Office européen des brevets

(11) **EP 3 289 408 B1**

(12) # EUROPÄISCHE PATENTSCHRIFT


(45) Veröffentlichungstag und Bekanntmachung des Hinweises auf die Patenterteilung:
**16.12.2020 Patentblatt 2020/51**

(21) Anmeldenummer: **16717250.1**

(22) Anmeldetag: **01.04.2016**

(51) Int Cl.:
***G02F 1/1347*** $^{(2006.01)}$ ***G02F 1/1334*** $^{(2006.01)}$

(86) Internationale Anmeldenummer:
**PCT/EP2016/000546**

(87) Internationale Veröffentlichungsnummer:
**WO 2016/173693 (03.11.2016 Gazette 2016/44)**


(54) **OPTISCHE SCHALTSCHICHT FÜR DEN EINSATZ IN EINEM OPTISCHEN SCHALTELEMENT**

OPTICAL SWITCHING LAYER FOR USE IN AN OPTICAL SWITCHING ELEMENT

COUCHE DE COMMUTATION OPTIQUE DESTINÉE À ÊTRE UTILISÉE DANS UN ÉLÉMENT DE COMMUTATION OPTIQUE


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2015 EP 15001239**

(43) Veröffentlichungstag der Anmeldung:
**07.03.2018 Patentblatt 2018/10**



(73) Patentinhaber: **Merck Patent GmbH**
**64293 Darmstadt (DE)**

(72) Erfinder:
- **JUNGE, Michael**
  **64319 Pfungstadt (DE)**
- **BEYER, Andreas**
  **63452 Hanau (DE)**
- **DE JONG, Ties**
  **3523 EN Utrecht (NL)**



(56) Entgegenhaltungen:
**WO-A1-00/60407 US-A- 5 570 210**

- **MACRELLI GUGLIELMO: "OPTICAL CHARACTERIZATION OF COMMERCIAL LARGE AREA LIQUID CRYSTAL DEVICES", SOLAR ENERGY MATERIALS AND SOLAR CELLS, ELSEVIER SCIENCE PUBLISHERS, AMSTERDAM, NL, Bd. 39, Nr. 2/04, Dezember 1995 (1995-12), Seiten 123-131, XP000586150, ISSN: 0927-0248, DOI: 10.1016/0927-0248(95)00044-5**
- **KITZEROW H-S: "POLYMER-DISPERSED LIQUID CRYSTALS FROM THE NEMATIC CURVILINEAR ALIGNED PHASE TO FERROELECTRIC FILMS", LIQUID CRYSTALS, TAYLOR & FRANCIS, Bd. 16, Nr. 1, Januar 1994 (1994-01), Seiten 1-31, XP000418459, ISSN: 0267-8292**


Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 289 408 B1

Printed by Jouve, 75001 PARIS (FR)

## Beschreibung

Die vorliegende Erfindung betrifft eine Schaltschicht für den Einsatz in einem Schaltelement, ein Schaltelement umfassend die Schaltschicht und ein Fensterelement umfassend das Schaltelement.

WO 2014/180525 A1 beschreibt ein Fenster umfassend eine Vorrichtung zur Regulierung des Energie-Durchtritts durch eine Fläche, wobei die Vorrichtung mindestens zwei Schaltschichten S(1) und S(2) enthält, die jeweils ein flüssigkristallines Medium enthaltend eine oder mehrere dichroitische Verbindungen enthalten, und wobei die Vorrichtung die Orientierungsschichten O(1), O(2), O(3) und O(4) enthält, wobei die genannten Schaltschichten und Orientierungsschichten in zueinander parallelen Ebenen in der Folge O(1), S(1), O(2), O(3), S(2), O(4) in der Vorrichtung vorliegen, wobei in mindestens einem Schaltzustand der Vorrichtung eine Orientierungsachse OA(1)* der Moleküle des flüssigkristallinen Mediums von S(1), die an O(2) angrenzen, vorliegt, und eine Orientierungsachse OA(2)* der Moleküle des flüssigkristallinen Mediums von S(2), die an O(3) angrenzen, vorliegt, und die Orientierungsachsen OA(1)* und OA(2)* nicht parallel sind und parallel zur Ebene der Schaltschichten liegen.

Applied Physics Letters, Band 74, Nr. 26 (1999) beschreibt auf den Seiten 3945 bis 3947 ein Verfahren zur Herstellung einer Schaltschicht. Dabei werden in einer ca. 30 $\mu$m dicken Zelle 30 Gew.% einer von der Fa. Merck unter der Bezeichnung ZLI-4488-000 erhältlichen nematischen Flüssigkristallmischung mit 70 Gew.% eines von der Fa. Cray Valley-Total unter der Bezeichnung CN965 erhältlichen aliphatischen Urethan-Diacrylats gemischt. Der Mischung wird ca. 1 Gew.% eines von der Fa. Ciba-Geigy unter der Bezeichnung Irgacure 651 erhältlichen Photoinitiators zugesetzt, wodurch eine photopolymerisationsfähige Mischung erhalten wird, welche 10 Minuten lang einer UV-Bestrahlung mit einer Quecksilber-Lampe ausgesetzt wird, wobei besagte Mischung in einem Magnetfeld der Feldstärke 7 T platziert wird. Es entsteht eine Schaltschicht, die beginnend ab ca. 60 Volt den Zustand maximaler erreichbarer Trübung erreicht.

Eine Schaltschicht gemäß einer der vorstehend beschriebenen Ausführungsformen kann in ein Schaltelement integriert werden. Das Schaltelement kann in ein Fensterelement, d.h. in die lichtdurchlässige Komponente eines Fensters, eingebaut werden. Ein Fensterelement, welches ein Schaltelement mit einer der vorstehend beschriebenen Schaltschichten enthält, kann zwischen den Zuständen "hell" und "dunkel" geschaltet werden, sodass im Schaltzustand "dunkel" eine Abschattung eines Raumes erreicht wird, der in seiner Außenwand das Fensterelement als lichtdurchlässige Komponente des bzw. der Fenster enthält, wobei das Ausmaß der Abschattung durch eine an das Schaltelement angelegte Spannung geregelt werden kann.

Jedoch wird auch das im Schaltzustand "dunkel" durch das Fensterelement hindurch in einen Raum eintretende Sonnenlicht von vielen Menschen als unangenehm empfunden, weil sie sich auch durch das "dunkle" Sonnenlicht immer noch geblendet fühlen. Um nicht mehr geblendet zu werden, können sie zwar das Schaltelement in immer "dunklere" Schaltzustände umschalten, bis schließlich ein "dunkler" Schaltzustand erreicht wird, der nicht mehr als blendend empfunden wirkt. Ferner ist zu beachten, dass Menschen gegen Blendung durch Sonnenlicht in unterschiedlichem Ausmaß empfindlich sind. Wenn dann endlich ein für alle ausreichend "dunkler" Schaltzustand erreicht ist, ist der in solcher Weise abgeschattete Raum oftmals derart dunkel, dass ein Arbeiten zumindest erschwert, wenn nicht gar unmöglich wird. Folglich ist man gezwungen, die für das Arbeiten erforderliche Helligkeit mit künstlicher Beleuchtung wieder herzustellen, was jedoch aus energetischer Sicht unerwünscht ist.

US 5,570,210 beschreibt Vorrichtungen mit einer Flüssigkristallschicht, welche ein polymerdispergiertes flüssigkristallines Medium enthält und Licht streut.

Daher stellt sich die vorliegende Erfindung die Aufgabe, ein Fensterelement mit einem Schaltelement zur Verfügung zu stellen, womit es zusätzlich zur Regulation durch Hell-/Dunkelzustände möglich wird, die Blendung durch Sonnenlicht in einem Raum individuell regeln zu können, ohne gezwungen zu sein, die im Raum erforderliche Helligkeit durch künstliche Beleuchtung zu bewirken.

Weiterhin stellt sich die Aufgabe, eine Schaltschicht zur Verwendung in einem Schaltelement bereitzustellen, die ein Schalten von einem durchsichtigen Zustand in einen trüben, d.h. nicht durchsichtigen Zustand des Schaltelements ermöglicht. Der trübe Zustand ist dabei ein Zustand, in welchem das Licht, das durch das Schaltelement durchtritt, gestreut wird. Der trübe Schaltzustand bewirkt dabei einen oder mehrere Effekte gewählt aus Reduktion der Blendung, wie oben erwähnt, und Herstellung von Blickdichtigkeit (privacy).

Diese Aufgabe wird gelöst durch eine Schaltschicht S für den Einsatz in einem Schaltelement gemäß Anspruch 1, wobei die Schaltschicht S mindestens zwei Schaltzustände aufweist und

- eine obere Schaltschichtebene oSe und eine untere Schaltschichtebene uSe, und, zwischen oSe und uSe angeordnet,
- ein flüssigkristallines Medium umfasst, wobei das flüssigkristalline Medium keinen Polymeranteil umfasst, einen chiralen Dotierstoff enthält und einen Klärpunkt von > 90°C aufweist,

wobei in einem der Schaltzustände parallele Lichtstrahlen, die in Einstrahl-Direktionen D(=) auf die obere Schaltschichtebene oSe treffen, beim Durchgang durch die Schaltschicht S aus D(=) abgelenkt werden, sodass nach dem Verlassen

der unteren Schaltschichtebene uSe die ursprünglich parallelen Lichtstrahlen in Vorwärtsstreudirektionen D(<) von der unteren Schaltschichtebene uSe hinweg und somit vorwärts gestreut werden, wodurch eine Vorwärtsstreuung resultiert, die als diffusive Transmission $T_d$ gemessen wird, wobei $T_d$ > 20% ist, und wobei $T_d$ gemäß Formel (1)

$$T_d = (I_{\geq 2,5°} / I_g) \cdot 100 \ [\%] \qquad (1)$$

definiert ist, worin

$I_{\geq 2,5°}$ die Intensität der Großwinkelstreuung mit Streuwinkeln ≥ 2,5° und
$I_g$ die Intensität der Gesamttransmission bedeuten.

Der Wert $T_d$ wird dabei über den spektralen Bereich von 380 nm bis 780 nm gemittelt angegeben. Die angegebenen Intensitäten werden ermittelt wie in den Ausführungsbeispielen angegeben, und der Wert $T_d$ wird wie in den Ausführungsbeispielen angegeben ermittelt.

Die erfindungsgemäße Schaltschicht S erlaubt, eingebaut in ein Schaltelement, zusätzlich zur Regulation durch Hell-/Dunkelzustände, die Blendung durch Sonnenlicht individuell regeln zu können, ohne die erforderliche Raumhelligkeit mit künstlicher Raum-Beleuchtung bewirken zu müssen. Dies wird möglich durch die diffusive Transmission der erfindungsgemäßen Schaltschicht S in einem der Schaltzustände von mehr als 20 %, wodurch die Blendung der von außen durch die Schaltschicht in den Raum eintretenden Lichtstrahlen zumindest signifikant verringert wird und gleichzeitig eine ausreichende Helligkeit im Raum herrscht, sodass tagsüber ein Arbeiten ohne künstliche Beleuchtung möglich wird. Dies wird von vielen Menschen als sehr angenehm empfunden und senkt zudem den Energiebedarf eines Gebäudes mit Fensterelementen, welche Schaltelemente mit der erfindungsgemäße Schaltschicht S umfassen.

Unter dem Begriff "Intensität", wie oben in der Definition der erfindungsgemäßen Schaltschicht S verwendet, wird bevorzugt die (Licht-) Transmissionsintensität oder einfach die (Licht-)Transmission durch die betreffende Schaltschicht verstanden. Nochmals bevorzugt wird unter Intensität die Intensität des Lichts im spektralen Bereich von 380 nm bis 780 nm verstanden. Am stärksten bevorzugt wird unter Intensität die numerisch gemittelte Transmission im Bereich von 380 bis 780 nm verstanden.

Unter dem Begriff "Schaltzustände" werden im Rahmen der vorliegenden Erfindung hauptsächlich binäre Zustande verstanden, in denen sich die erfindungsgemäße Schaltschicht S befinden kann, d.h.

- in einem Schaltzustand, worin die erfindungsgemäße Schaltschicht S eine diffusive Transmission $T_d$ > 20 % aufweist und dem menschlichen Auge als homogen trüb erscheint, und
- in einem anderen Schaltzustand , worin die erfindungsgemäße Schaltschicht S eine diffusive Transmission $T_d \leq$ 20 % aufweist und dem menschlichen Auge als weitgehend transparent bzw. klar erscheint.

Es ist jedoch auch möglich, dass die erfindungsgemäße Schaltschicht weitere Schaltzustände aufweist, insbesondere Zwischenzustände.

Zusätzlich erlaubt die erfindungsgemäße Schaltschicht S, wenn sie mit weiteren Schaltschichten in einem Schaltelement kombiniert wird, ein Schalten zwischen einem vollkommen blickdichten Zustand und einem Zustand mit Blickkontakt nach außen. Insbesondere der Blickkontakt nach außen ist eine Eigenschaft, die Markisen und Jalousien nicht bieten.

Unter dem Begriff "Lichtstrahlen" werden im Rahmen der vorliegenden Erfindung insbesondere elektromagnetische Strahlen im UV-A-, VIS-, sowie NIR-Bereich verstanden. Insbesondere werden darunter Lichtstrahlen einer Wellenlänge verstanden, welche von den üblicherweise in Fenstern verwendeten Materialien (z.B. Glas) nicht oder nur in einem vernachlässigbaren Umfang absorbiert wird. Gemäß den üblicherweise verwendeten Definitionen wird unter dem UV-A-Bereich eine Wellenlänge von 320 nm bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden.

Unter dem Begriff "flüssigkristallines Medium" wird im Rahmen der vorliegenden Erfindung ein Material verstanden, das unter bestimmten Bedingungen flüssigkristalline Eigenschaften aufweist. Typischerweise enthält das flüssigkristalline Medium gemäß der Erfindung mindestens eine Verbindung, deren Moleküle eine langgestreckte Form aufweisen, d.h. in einer Raumrichtung deutlich länger (Längsachse) sind als in den anderen beiden Raumrichtungen.

Das flüssigkristalline Medium der Schaltschicht S ist in mindestens einem Zustand der Schaltschicht vorwärtsstreuend.

In bevorzugten Ausführungsformen weist die erfindungsgemäße Schaltschicht S in einem der Schaltzustände eine diffusive Transmission $T_d$ > 25 % auf, besonders bevorzugt $T_d$ > 30 %, ganz besonders bevorzugt $T_d$ > 35%, und am stärksten bevorzugt $T_d$ > 40%.

In einer weiteren bevorzugten Ausführungsform weist die erfindungsgemäße Schaltschicht S in einem anderen

Schaltzustand eine diffusive Transmission $T_d$ < 5 % auf, wobei eine diffusive Transmission $T_d$ < 3 % besonders bevorzugt ist.

Der streuende Schaltzustand tritt bevorzugt bei einer angelegten Spannung auf, welche kleiner ist als die Spannung, bei der der nicht streuende Zustand auftritt. Insbesondere ist die angelegte Spannung für das Erreichen des streuenden Schaltzustands deutlich größer als Null, bevorzugt 2-10 V, besonders bevorzugt 3 bis 7 Volt. Die angelegte Spannung für das Erreichen des nicht streuenden Schaltzustands liegt bevorzugt zwischen 10 und 35 V, besonders bevorzugt zwischen 15 und 30 V.

Gemäß der vorliegenden Erfindung umfasst die erfindungsgemäße Schaltschicht S ein flüssigkristallines Medium, das einen chiralen Dotierstoff (Dotand) enthält.

Bevorzugt liegen, sofern die Schaltschicht S im Schaltzustand mit $T_d$ > 20% vorliegt, d.h. im trüben Schaltzustand, die Moleküle des flüssigkristallinen Mediums in einer chiral nematischen Phase vor.

In einer weiteren bevorzugten Ausführungsform ist die in dem einen Schaltzustand, in welchem $T_d$ > 20% ist, vorliegende chiral nematische Phase eine in Polydomänen ausgerichtete Phase. Im Rahmen der vorliegenden Erfindung bedeutet "eine in Polydomänen ausgerichtete Phase" einen Zustand, in dem die Moleküle des flüssigkristallinen Mediums keine einheitliche Orientierungsachse und keine einheitliche gemeinsame lineare Helixachse aufweisen. Die in Polydomänen ausgerichtete Phase der Schaltschicht S hat den Vorteil, dass sie homogen ist, bevorzugt über die gesamte Fläche frei von visuell sichtbaren Störungen ist. Insbesondere ist dies ein Vorteil gegenüber Phasen, in denen Helices auftreten, welche einheitlich parallel zu den Substratschichten liegen, und/oder zu Phasen, welche sogenannte Streifendomänen aufweisen. Ein weiterer Vorteil der in Polydomänen ausgerichteten Phase ist, dass diese mit den üblichen planar oder homeotrop orientierenden Orientierungsschichten erzielt werden kann, d.h. dass nicht auf spezielle Zusatzbehandlungen der Orientierungsschichten zurückgegriffen werden muss.

In einer weiteren bevorzugten Ausführungsform ist die in dem einen Schaltzustand vorliegende chiral nematische Phase zumindest lokal verdrillt, alternativ auch in sich daraus darstellbaren übergeordneten makroskopischen Strukturanordnungen.

In einer weiteren bevorzugten Ausführungsform ist die in dem anderen Schaltzustand vorliegende Phase unverdrillt, also homöotrop oder planar ausgerichtet, oder sie hat eine geringfügige Verdrillung. Unter einer geringfügigen Verdrillung wird hierbei eine Verdrillung der Moleküle über die Dicke der Schicht von 5°-360°, bevorzugt von 45°-300°, und besonders bevorzugt von 90°, 180° oder 270° verstanden.

Vorzugsweise ist der chirale Dotierstoff in der nematischen Phase homogen verteilt, sodass die Moleküle des flüssigkristallinen Mediums und der chirale Dotierstoff homogen ineinander verteilt sind.

Besonders bevorzugt ist der chirale Dotierstoff in der nematischen Phase gelöst.

Vorzugsweise wird die chiral nematische Phase in Gestalt einer nematischen flüssigkristallinen Mischung eingesetzt, wobei die Mischung eine Brechungsindex-Anisotropie $\Delta n$ und eine dielektrische Anisotropie $\Delta\varepsilon$ aufweist. Vorzugsweise besitzt die Mischung eine Brechungsindex-Anisotropie $\Delta n$ im Bereich von 0,03 bis 0,40, besonders bevorzugt im Bereich von 0,07 bis 0,30, und/oder eine dielektrische Anisotropie $\Delta\varepsilon$ im Bereich von -50 bis +100, besonders bevorzugt im Bereich von -15 bis +70. Bevorzugt sind flüssigkristalline Mischungen mit einer negativen dielektrischen Anisotropie $\Delta\varepsilon$, welche besonders bevorzugt einen Wert zwischen -6 und -3 hat. Alternativ bevorzugt sind flüssigkristalline Mischungen mit einer positiven dielektrischen Anisotropie $\Delta\varepsilon$, welche besonders bevorzugt einen Wert zwischen 3 und 50 hat, ganz besonders bevorzugt einen Wert zwischen 5 und 20 hat.

Bevorzugt umfasst die flüssigkristalline Mischung mindestens eine Verbindung einer Komponente I, mindestens eine Verbindung einer Komponente II, und mindestens eine Verbindung einer Komponente III.

Verbindungen der Komponente I sind gewählt aus zweikernigen Verbindungen, die mindestens eine Endgruppe gewählt aus F, CN, Alkylgruppen mit 1 bis 10 C-Atomen, Alkenylgruppen mit 2 bis 10 C-Atomen und Alkoxygruppen mit 1 bis 10 C-Atomen enthalten.

Verbindungen der Komponente II sind gewählt aus dreikernigen Verbindungen, die mindestens eine Endgruppe gewählt aus F, CN, Alkylgruppen mit 1 bis 10 C-Atomen, Alkenylgruppen mit 2 bis 10 C-Atomen und Alkoxygruppen mit 1 bis 10 C-Atomen enthalten.

Verbindungen der Komponente III sind gewählt aus vierkernigen Verbindungen, die mindestens eine Endgruppe gewählt aus F, CN, Alkylgruppen mit 1 bis 10 C-Atomen, Alkenylgruppen mit 2 bis 10 C-Atomen und Alkoxygruppen mit 1 bis 10 C-Atomen enthalten.

Bevorzugt ist der Anteil der Verbindungen der Komponenten I, II und III im flüssigkristallinen Medium zusammen mindestens 70 Gew.-%, bevorzugt mindestens 80 Gew.-%, und besonders bevorzugt mindestens 85 Gew.-%.

Eine bevorzugt eingesetzte Mischung flüssigkristalliner Moleküle ist die von der Anmelderin als Grundmischung #2 bezeichnete Mischung aus den im Folgenden dargestellten Molekülen.

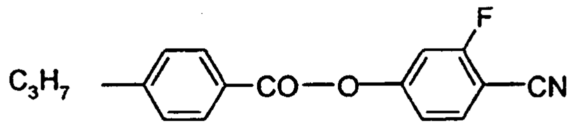

**PZG-3-N**

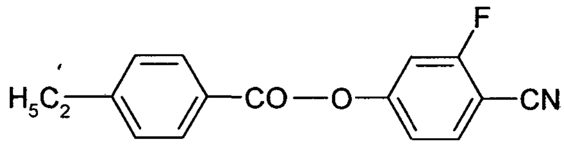

PZG-2-N

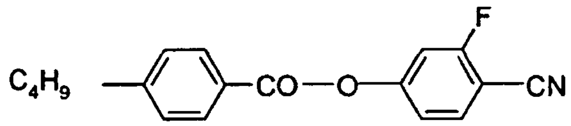

PZG-4-N

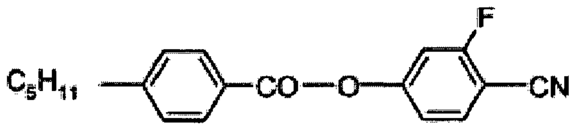

**PZG-5-N**

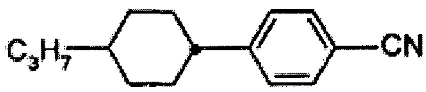

**CP-3-N**

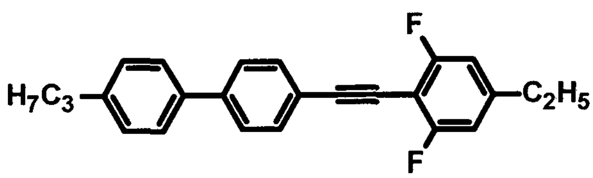

PPTUI-3-2

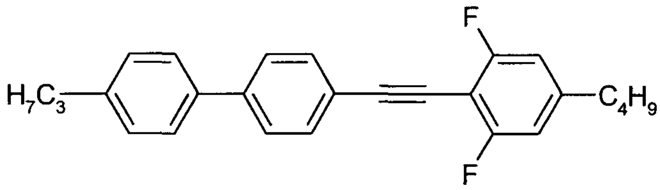

PPTUI-3-4

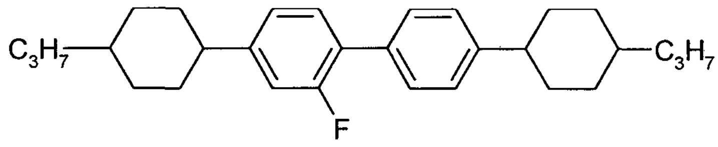

CGPC-3-3

Eine weitere bevorzugt eingesetzte Mischung flüssigkristalliner Moleküle ist die von der Anmelderin als Grundmischung #3 bezeichnete Mischung aus den im Folgenden dargestellten Molekülen.

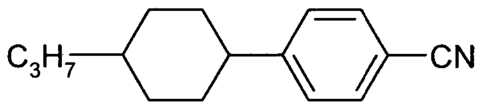

CP-3-N

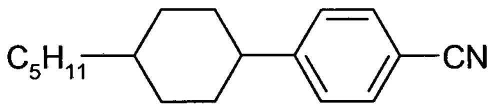

CP-5-N

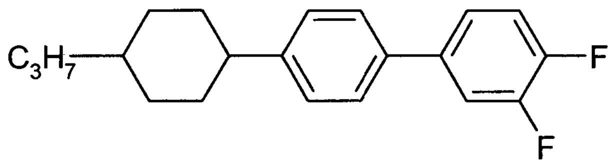

CPG-3-F

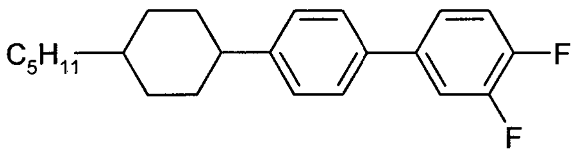

CPG-5-F

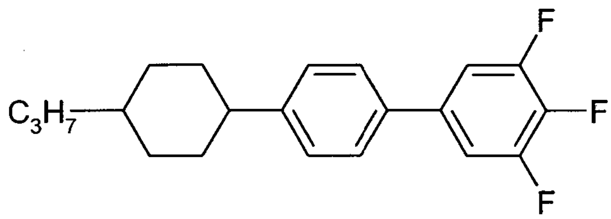

CPU-3-F

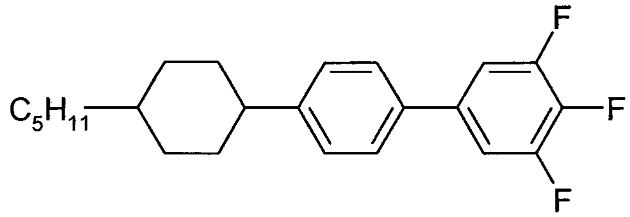

CPU-5-F

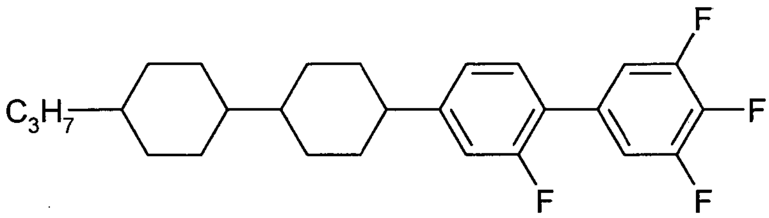

CCGU-3-F

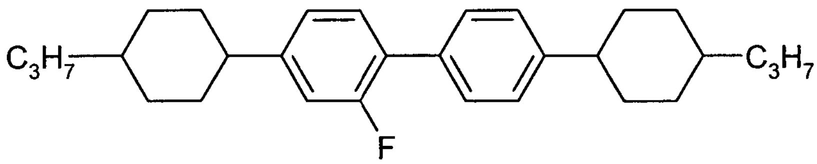

CGPC-3-3

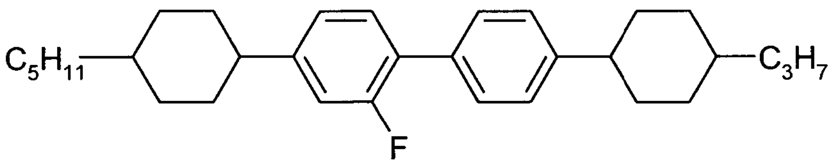

CGPC-5-3

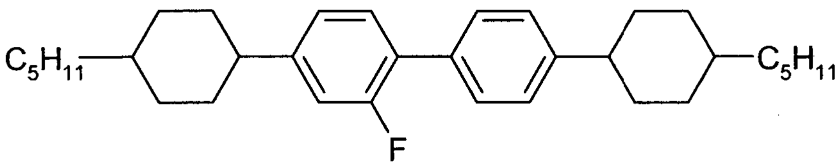

CGPC-5-5

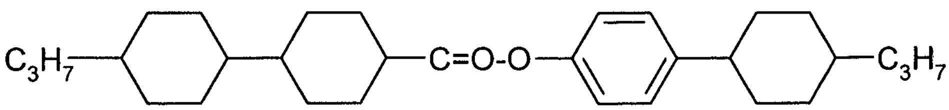

CCZPC-3-3

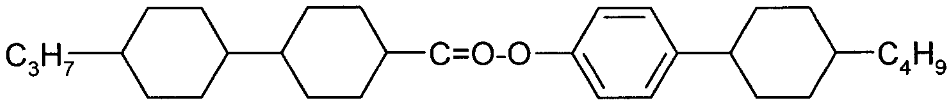

CCZPC-3-4

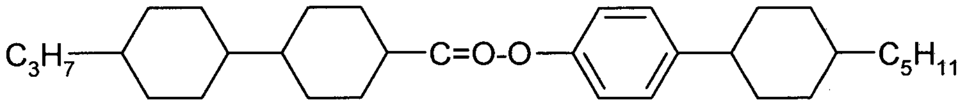

CCZPC-3-5

Ebenfalls bevorzugt ist auch die in den Ausführungsbeispielen genannte Grundmischung #4.

Als chiraler Dotierstoff dient vorzugsweise eines der im Folgenden dargestellten Moleküle, wobei besonders bevorzugt die unten gezeigten chiralen Dotierstoffe S-5011 oder S-811 sind.

| |
|---|
| 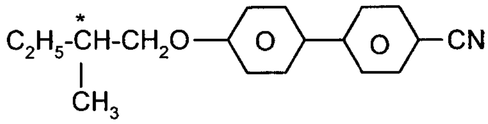 |
| |
| 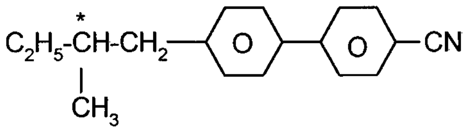 |
| |
| 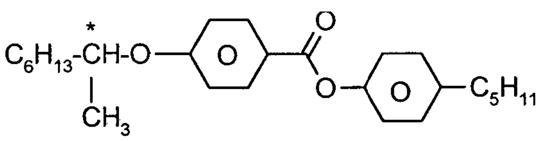 |
| |
| 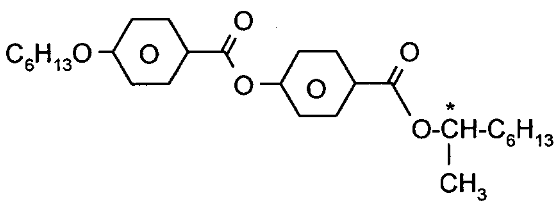 |
| |
| 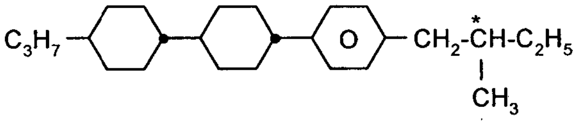 |
| |

(fortgesetzt)

| |
|---|
| 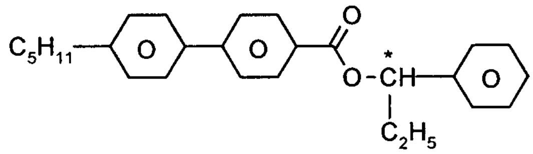 |
| S-811 |
| 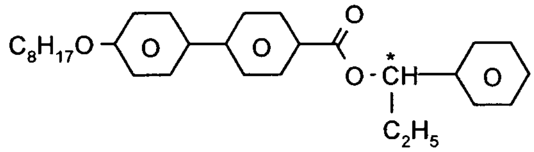 |
| |
| 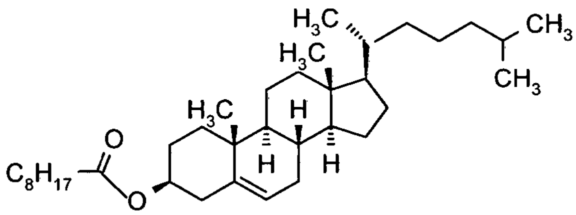 |
| |
| 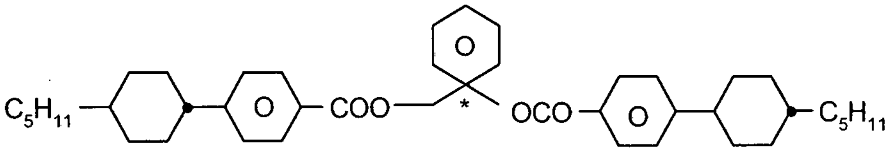 |
| |
| 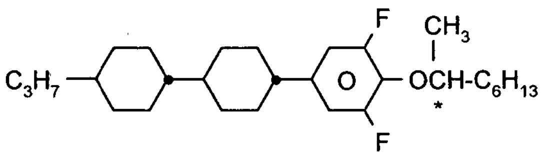 |
| |
| 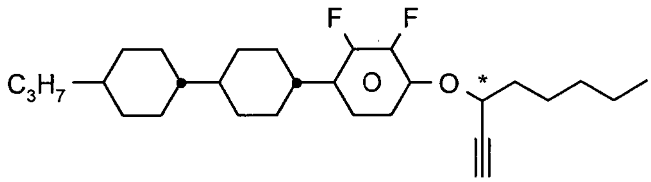 |
| |
| 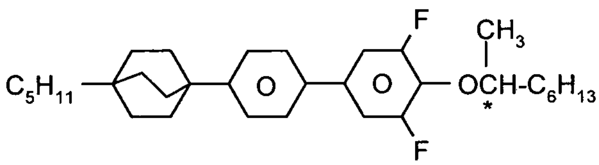 |
| |

(fortgesetzt)

| 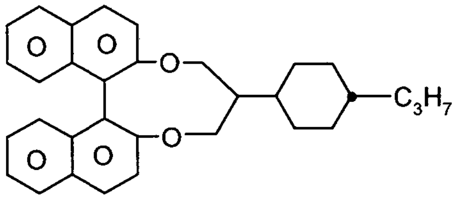 |
|---|
| S-5011 |

Vorzugsweise weist die Schaltschicht S einen durchschnittlichen Brechungsindex n auf, und die Moleküle weisen eine Ganghöhe (pitch) p auf, wobei das Produkt $n \cdot p > 0{,}8$ μm, besonders bevorzugt > 1,0 μm, ganz besonders bevorzugt > 1,2 μm beträgt und besonders bevorzugt im Bereich von 50 μm bis 0,8 μm liegt, und ganz besonders bevorzugt im Bereich von 25 μm bis 0,8 μm liegt.

Weiterhin ist es bevorzugt, dass die Ganghöhe (pitch) p zwischen 0,5 μm und 50 μm liegt, besonders bevorzugt zwischen 0,5 μm und 30 μm liegt, und ganz besonders bevorzugt zwischen 0,5 μm und 15 μm liegt. Am stärksten bevorzugt liegt p zwischen 1 μm und 5 μm. Es wurde gefunden, dass damit niedrige Schaltspannungen erreicht werden können. Niedrige Schaltspannungen sind unter anderem aus Sicherheitsgründen für schaltbare Fenster von Vorteil.

Der Wert p kann vom Fachmann durch geeignete Wahl des chiralen Dotierstoffs und seines helikalen Drehvermögens β und durch seine Konzentration eingestellt werden.

In einer weiteren bevorzugten Ausführungsform weist der chirale Dotierstoff einen Gewichtsanteil $w_D$ am flüssigkristallinen Medium im Bereich von 0,1 Gew.% bis 30,0 Gew.% auf, bevorzugt von 0,1 Gew.-% bis 10 Gew.-%.

In einer weiteren bevorzugten Ausführungsform der erfindungsgemäßen Schaltschicht S, die ein flüssigkristallines Medium mit einem chiralen Dotierstoff enthält, wird vorzugsweise ein chiraler Dotierstoff eingesetzt, der ein helikales Drehvermögen (Helical Twisting Power) $\beta = (p \cdot c)^{-1}$ $\mu m^{-1}$ aufweist, wobei p die Ganghöhe der Moleküle des flüssigkristallinen Mediums in μm und c die Konzentration des chiralen Dotierstoffs in Gew.-% bezogen auf das gesamte flüssigkristalline Medium ist, und wobei β größer als 5 $\mu m^{-1}$ ist. Bevorzugt weist der chirale Dotierstoff ein helikales Drehvermögen auf, welches zwischen 5 bis 250 $\mu m^{-1}$ liegt, besonders bevorzugt zwischen 7 und 150 $\mu m^{-1}$.

Weiterhin ist es bevorzugt, dass der Wert d / p > 2 ist, wobei d die Dicke der Schaltschicht S ist, und p die Ganghöhe (pitch) der Moleküle des flüssigkristallinen Mediums. Besonders bevorzugt ist d / p < 20. Ganz besonders bevorzugt hat d/p einen Wert zwischen 3 und 10. Mit geeigneten Werten von d/p können insbesondere stark streuende Schaltschichten S erhalten werden, d.h. Schaltschichten S mit hohen Werten der diffusiven Transmission $T_d$.

In einer bevorzugten Ausführungsform der erfindungsgemäßen Schaltschicht S, welche ein flüssigkristallines Medium mit einem chiralen Dotierstoff umfasst, lässt sich die erfindungsgemäße Schaltschicht S, eingebaut in ein Schaltelement, von einem dem menschlichen Auge als klar erscheinenden Zustand, worin die Moleküle des flüssigkristallinen Mediums homeotrop, d.h. senkrecht zu den Schaltschichtebenen oSe und uSe angeordnet sind, in einen in Polydomänen ausgerichteten Zustand schalten, der dem menschlichen Auge als homogen trüb erscheint. Die Tatsache, dass der Polydomänen-Zustand unter dem Mikroskop Strukturierungen aufweist, ist dabei unschädlich für die Eigenschaft, visuell homogen trüb zu sein.

Erfindungsgemäß weist das flüssigkristalline Medium einen Klärpunkt von > 90 °C, bevorzugt von > 100 °C oder von > 105 °C und ganz besonders bevorzugt von > 110 °C auf.

Ferner weist das flüssigkristalline Medium der erfindungsgemäßen Schaltschicht S allgemein vorzugsweise einen spezifischen Widerstand von > $1{,}0 \cdot 10^9$ Ohm·cm, besonders bevorzugt > $1{,}0 \cdot 10^{11}$ Ohm·cm auf.

Ferner ist es bevorzugt, dass die erfindungsgemäße Schaltschicht S mindestens einen dichroitischen Farbstoff in einer Farbstoffkonzentration im Bereich von 0,01 Gew.% bis 25 Gew.%, besonders bevorzugt im Bereich von 0,1 Gew.% bis 15 Gew.% bezogen auf das Gewicht des flüssigkristallinen Mediums umfasst.

Es sind jedoch unter bestimmten Bedingungen auch Ausführungsformen bevorzugt, in denen die Schaltschicht S keine Farbstoffe enthält. Dies hat den Vorteil eines einfacheren Aufbaus des Schaltelements und einer höheren Transmission im Hellzustand. Weiterhin ist in diesem Fall das optische Erscheinungsbild des Schaltelements weiß, d.h. ungefärbt, was für bestimmte Anwendungen wünschenswert ist, und die Lebensdauer des Schaltelements bei Hitze und Lichtbestrahlung ist bevorzugt höher.

Unter dem Begriff "dichroitischer Farbstoff" wird im Rahmen der vorliegenden Erfindung eine lichtabsorbierende Verbindung verstanden, bei der die Absorptionseigenschaften von der Orientierung der Moleküle relativ zur Polarisationsrichtung des Lichts abhängig sind. Typischerweise weist ein dichroitischer Farbstoff gemäß der vorliegenden Erfindung eine langgestreckte Form auf, d.h. die Farbstoffmoleküle sind in einer Raumrichtung deutlich länger (Längsachse) als in den anderen beiden Raumrichtungen.

Vorzugsweise umfasst die erfindungsgemäße Schaltschicht 2, 3 oder 4, besonders bevorzugt 3 dichroitische Farbstoffe, wobei sich die Absorptionsspektren der dichroitischen Farbstoffe bevorzugt derart ergänzen, dass für das menschliche Auge der Eindruck von schwarzer Farbe entsteht.

Bevorzugt sind die Farbstoffverbindungen gewählt aus Azoverbindungen, Anthrachinonen, Methinverbindungen, Azomethinverbindungen, Merocyaninverbindungen, Naphthochinonen, Tetrazinen, Rylenen, Benzothiadiazolen, Pyrromethenen, Diketopyrrolopyrrolen, Thienothiadiazolen und Malononitrilen. Besonders bevorzugt sind darunter Azoverbindungen, Anthrachinone, Rylene, insbesondere wie in WO 2014/090373 offenbart, Benzothiadiazole, insbesondere wie in WO 2014/187529 offenbart, Diketopyrrolopyrrole, insbesondere wie in der noch nicht offengelegten Anmeldung EP 13005918.1 offenbart, Thienothiadiazole, insbesondere wie in der noch nicht offengelegten Anmeldung EP 14002950.5 offenbart, und Malononitrile, insbesondere wie in der noch nicht offengelegten Anmeldung EP 14004145.0 offenbart.

Besonders bevorzugt werden die folgenden Farbstoffe eingesetzt, deren Strukturen im Folgenden abgebildet werden.

| |
|---|
| 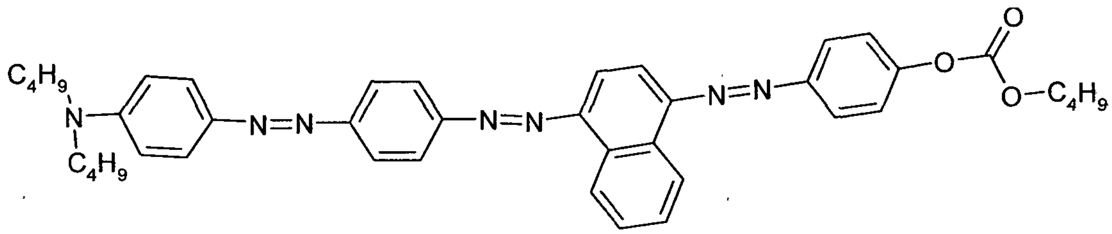 |
| D1 |
| 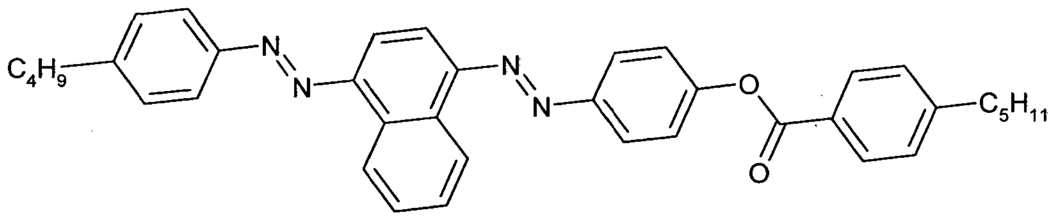 |
| D2 |
| 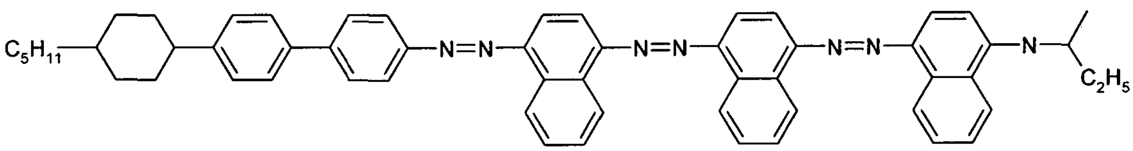 |
| D3 |
| 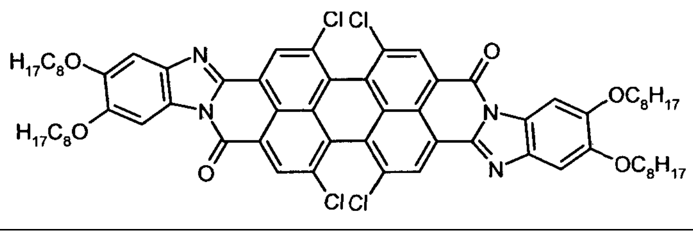 |
| 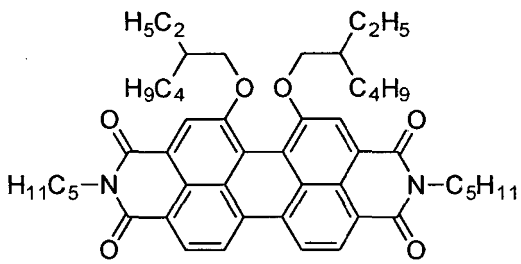 |

(fortgesetzt)

| |
|---|
| 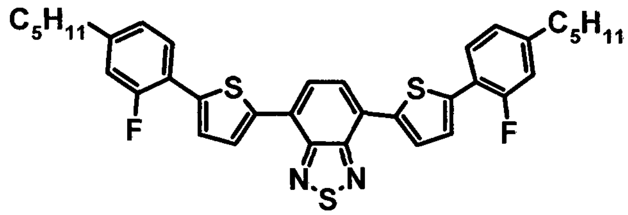 |
| 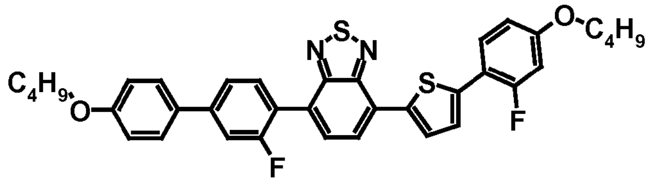 |

Vorzugsweise weist die erfindungsgemäße Schaltschicht S eine Dicke im Bereich von 1 μm bis 300 μm, besonders bevorzugt im Bereich von 3 μm bis 100 μm, ganz besonders bevorzugt im Bereich von 20-100 μm auf. Dies gilt für den Fall, in dem das erfindungsgemäße Schaltelement genau eine Schaltschicht S aufweist. Falls das Schaltelement mehrere Schaltschichten S aufweist, die hintereinander angeordnet sind, beträgt die Summe der Dicken dieser Schichten bevorzugt 5-200 μm, besonders bevorzugt 10-100 μm.

In einer weiteren bevorzugten Ausführungsform weist die erfindungsgemäße Schaltschicht S eine Dicke im Bereich von 3 μm bis 200 μm auf, bevorzugt eine Dicke im Bereich von 3 bis 75 μm, und bei einer Wellenlänge der Lichtstrahlen von 550 nm liegt im trüben Schaltzustand die Gesamttransmission $T_{gesamt}$ im Bereich von 60 % bis 100 % und die diffusive Transmission $T_d$ im Bereich von 25 % bis 100 %.

In einer weiteren bevorzugten Ausführungsform streut die erfindungsgemäße Schaltschicht S in einem der Schaltzustände vorzugsweise weniger als 45 %, besonders bevorzugt weniger als 20 %, noch bevorzugter weniger als 10 % und ganz besonders bevorzugt weniger als 5 % der parallelen Lichtstrahlen in Rückwärtsstreudirektionen D(>) von der oberen Schaltschichtebene oSe hinweg. Besonders bevorzugt liegt diese geringe Rückwärtsstreuung in allen Schaltzuständen der Schaltschicht vor, insbesondere auch im streuenden Schaltzustand der Schaltschicht.

In einer weiteren bevorzugten Ausführungsform weist die erfindungsgemäße Schaltschicht S innerhalb eines Gesamttransmissionsbereichs von 0 % bis 80 % einen Regelbereich der Gesamttransmission auf, wobei der Regelbereich mindestens 15 % beträgt.

Die erfindungsgemäße Schaltschicht S kann zusammen mit weiteren Schaltschichten enthaltend flüssigkristallines Medium in einer Multi-Schaltschicht-Vorrichtung vorliegen. Die zusätzlichen Schaltschichten können dabei weitere Schaltschichten S sein, und/oder sie können Schaltschichten sein, welche von hell nach dunkel schalten, ohne einen streuenden Schaltzustand zu haben. Insbesondere bevorzugt sind Multi-Schaltschicht-Vorrichtungen enthaltend zwei, drei oder vier Schaltschichten, besonders bevorzugt solche enthaltend zwei oder drei Schaltschichten. Bevorzugt ist dabei mindestens eine dieser Schaltschichten eine Schaltschicht, welche keinen streuenden Schaltzustand hat. Diese Schaltschicht, welche keinen streuenden Schaltzustand hat, kann dafür genutzt werden, die Transmission durch das gesamte Schaltelement und damit die Helligkeit des gesamten Schaltelements schaltbar zu machen, indem sie von hell zu dunkel schaltet.

Die vorliegende Erfindung umfasst ferner ein Schaltelement umfassend eine Schaltschicht S der vorstehend beschriebenen Art, wobei die Schaltschicht S in einer ersten Schichtabfolge angeordnet ist, und wobei die erste Schichtabfolge von außen nach innen

- eine äußere Substratschicht,
- eine äußere elektrisch leitfähige Schicht,
- die Schaltschicht S,
- eine innere elektrisch leitfähige Schicht und
- eine innere Substratschicht

umfasst.

Die äußere und die innere Substratschicht können aus Glas oder aus einem Polymeren bestehen, insbesondere aus Glas, Polyethylenterephthalat (PET), Polyethylennaphthalat (PEN), Polyvinylbutyral (PVB) Polymethylmethacrylat (PMMA), Polycarbonat (PC), Polyimid (PI), COP (Cyclische Olefin-Polymere), TAC (Triacetylcellulose).

Das erfindungsgemäße Schaltelement enthält bevorzugt eine oder mehrere Schichten, die UV-Licht blockieren.

Insbesondere enthält sie eine oder mehrere Schichten, die Licht mit einer Wellenlänge von weniger als 350 nm, bevorzugt von weniger als 360 nm, besonders bevorzugt von weniger als 380 nm, nicht oder nur zu einem sehr geringen Anteil passieren lassen. Es wurde gefunden, dass sich Vorrichtungen, die eine derartige Schicht aufweisen, länger reproduzierbar und mit gleichbleibenden Eigenschaften schalten lassen.

Die äußere und die innere elektrisch leitfähige Schicht kann aus elektrisch leitfähigen transparenten Oxiden (TCO), bevorzugt ITO oder $SnO_2$:F, oder aus einer dünnen transparenten Metall- und/oder Metalloxidschicht bestehen, z.B. aus Silber. Vorzugsweise sind die äußere und die innere elektrisch leitfähige Schicht mit elektrischen Anschlüssen versehen. Zur Spannungsversorgung dient vorzugsweise eine Batterie, ein Akkumulator, eine Superkapazität oder eine externe Stromquelle.

In einer bevorzugten Ausführungsform des erfindungsgemäßen Schaltelements ist in der ersten Schichtabfolge zwischen der äußeren elektrisch leitfähigen Schicht und der Schaltschicht eine äußere Orientierungsschicht und zwischen der inneren elektrisch leitfähigen Schicht und der Schaltschicht eine innere Orientierungsschicht angeordnet. Bevorzugt ist die äußere und die innere Orientierungsschicht eine Polyimid-Schicht. Besonders bevorzugt weist die äußere und die innere Orientierungsschicht an ihrer Oberfläche angrenzend an die erfindungsgemäße Schaltschicht S geriebenes Polyimid auf. Auf bestimmte, dem Fachmann bekannte Art geriebenes Polyimid führt zu einer Vorzugsausrichtung der Moleküle des flüssigkristallinen Mediums in der erfindungsgemäßen Schaltschicht S in Reiberichtung, wenn die Moleküle planar zur äußeren bzw. inneren Orientierungsschicht vorliegen (homogene bzw. planare Orientierung). Alternativ können auch Orientierungs-schichten eingesetzt werden, die eine vertikale (homeotrope) Orientierung der Moleküle des flüssigkristallinen Mediums bewirken. Solche Orientierungsschichten bestehen bevorzugt aus dem Material Polyimid und sind dem Fachmann bekannt und kommerziell erhältlich. Weiter bevorzugt sind auch Orientierungsschichten, die nach UV-Belichtung des Orientierungsmaterials später eine Vorzugsrichtung des LC hervorrufen. Solche Materialien sind unter dem Fachbegriff "Photoalignment" bekannt.

In einer weiteren bevorzugten Ausführungsform des erfindungsgemäßen Schaltelements weist das Schaltelement auf der äußeren Substratschicht der ersten Schichtabfolge und/oder auf der inneren Substratschicht der ersten Schichtabfolge eine zweite Schichtabfolge auf, wobei die zweite Schichtabfolge von außen nach innen

- eine Substratschicht,
- eine elektrisch leitfähige Schicht,
- eine Schaltschicht umfassend ein flüssigkristallines Medium,
- eine elektrisch leitfähige Schicht und
- eine Substratschicht

umfasst.

In einer bevorzugten Ausführungsform der oben genannten zweiten Schichtabfolge ist jeweils zwischen der elektrisch leitfähigen Schicht und der Schaltschicht eine Orientierungsschicht vorhanden.

Dabei gilt für bevorzugte Ausführungsformen von Substratschicht, elektrisch leitfähiger Schicht und Orientierungsschicht der zweiten Schichtabfolge entsprechend das Gleiche, das bereits bei der Beschreibung der entsprechenden Schichten der ersten Schichtabfolge erläutert wurde. Vorzugsweise ist das flüssigkristalline Medium der Schaltschicht der zweiten Schichtabfolge nicht vorwärtsstreuend. Alternativ und ebenfalls bevorzugt kann die Schaltschicht der zweiten Schichtabfolge eine weitere Schaltschicht S sein, das heißt eine Schaltschicht, welche einen streuenden Zustand aufweist.

In einer weiteren bevorzugten Ausführungsform des erfindungsgemäßen Schaltelements weist das Schaltelement auf der äußeren Substratschicht der ersten Schichtabfolge und/oder auf der inneren Substratschicht der ersten Schichtabfolge eine dritte Schichtabfolge auf, wobei die dritte Schichtabfolge von außen nach innen

- eine Substratschicht ,
- eine elektrisch leitfähige Schicht,
- eine Orientierungsschicht,
- eine Schaltschicht umfassend ein flüssigkristallines Medium,
- eine Orientierungsschicht ,
- eine elektrisch leitfähige Schicht,
- eine Substratschicht,
- eine oder mehrere weitere optionale Schichten, wie zum Beispiel eine lowE-Beschichtung,
- eine optionale Luftschicht,
- eine optionale Substratschicht,
- eine elektrisch leitfähige Schicht,
- eine Orientierungsschicht,
- eine Schaltschicht umfassend ein flüssigkristallines Medium,

- eine Orientierungsschicht ,
- eine elektrisch leitfähige Schicht und
- eine Substratschicht

umfasst.

Dabei gilt für bevorzugte Ausführungsformen der Substratschichten, der elektrisch leitfähigen Schichten und der Orientierungsschichten der dritten Schichtabfolge entsprechend das Gleiche, das bereits bei der Beschreibung der entsprechenden Schichten der ersten Schichtabfolge erläutert wurde. Vorzugsweise ist das flüssigkristalline Medium der Schaltschichten der dritten Schichtabfolge nicht vorwärtsstreuend. Alternativ und ebenfalls bevorzugt kann eine oder beide, bevorzugt eine der Schaltschichten der zweiten Schichtabfolge eine Schaltschicht S sein, das heißt eine Schaltschicht, welche einen streuenden Zustand aufweist.

Besonders bevorzugt umfasst die dritte Schichtabfolge von außen nach innen

- eine Substratschicht,
- eine elektrisch leitfähige Schicht,
- eine Schaltschicht umfassend ein flüssigkristallines Medium,
- eine elektrisch leitfähige Schicht,
- eine Substratschicht,
- eine elektrisch leitfähige Schicht,
- eine Schaltschicht umfassend ein flüssigkristallines Medium,
- eine elektrisch leitfähige Schicht und
- eine Substratschicht.

In einer bevorzugten Ausführungsform der oben genannten dritten Schichtabfolge ist jeweils zwischen elektrisch leitfähiger Schicht und Schaltschicht eine Orientierungsschicht vorhanden.

Vorzugsweise weist das flüssigkristalline Medium der Schaltschicht der zweiten Schichtabfolge oder das flüssigkristalline Medium einer oder beider der Schaltschichten der dritten Schichtabfolge mindestens einen dichroitischen Farbstoff in einer Farbstoffkonzentration im Bereich von 0,01 Gew.% bis 25 Gew.% bezogen auf das Gewicht des jeweiligen flüssigkristallinen Mediums auf. Bevorzugt sind in dem flüssigkristallinen Medium jeweils 2, 3 oder 4, bevorzugt 3 oder mehr dichroitische Farbstoffe vorhanden, wobei sich die Absorptionsspektren der dichroitischen Farbstoffe bevorzugt derart ergänzen, dass für das menschliche Auge der Eindruck von schwarzer Farbe entsteht, und wobei besonders bevorzugt die Farbstoffe D1, D2 und D3 eingesetzt werden. Unter bestimmten Bedingungen kann es bevorzugt sein, dass 4, 5 oder 6 verschiedene Farbstoffe im flüssigkristallinen Medium enthalten sind.

Bevorzugte Ausführungsformen des Schaltelements gemäß der vorliegenden Anmeldung enthalten die folgenden Kombinationen von Schaltschichten, beziehungsweise die folgenden einzelnen Schaltschichten:

a) Schaltschicht S, welche keine dichroitischen Farbstoffe enthält
b) Schaltschicht S, welche dichroitische Farbstoffe enthält
c) zwei Schaltschichten S, welche beide keine dichroitischen Farbstoffe enthalten
d) Schaltschicht S, welche keine dichroitischen Farbstoffe enthält, und Schaltschicht S, welche dichroitische Farbstoffe enthält
e) zwei Schaltschichten S, welche beide dichroitische Farbstoffe enthalten
f) Schaltschicht S, welche keine dichroitischen Farbstoffe enthält, und Schaltschicht S1
g) Schaltschicht S, welche keine dichroitischen Farbstoffe enthält, und zwei Schaltschichten S1
h) Schaltschicht S, welche dichroitische Farbstoffe enthält, und Schaltschicht S1
i) Schaltschicht S, welche dichroitische Farbstoffe enthält, und zwei Schaltschichten S1
j) zwei Schaltschichten S, welche beide keine dichroitischen Farbstoffe enthalten, und Schaltschicht S1
k) Schaltschicht S, welche keine dichroitischen Farbstoffe enthält, und Schaltschicht S, welche dichroitische Farbstoffe enthält, und Schaltschicht S1
l) zwei Schaltschichten S, welche beide dichroitische Farbstoffe enthalten, und Schaltschicht S1
m)zwei Schaltschichten S, welche beide keine dichroitischen Farbstoffe enthalten, und zwei Schaltschichten S1
n) Schaltschicht S, welche keine dichroitischen Farbstoffe enthält, und Schaltschicht S, welche dichroitische Farbstoffe enthält, und zwei Schaltschichten S1
o) zwei Schaltschichten S, welche beide dichroitische Farbstoffe enthalten, und zwei Schaltschichten S1,

wobei die Schaltschicht S1 eine Schaltschicht ist, welche keinen streuenden Zustand aufweist, und von einem hellen Schaltzustand zu einem dunklen Schaltzustand schaltet.

Bevorzugt ist die Schaltschicht S1 eine Schaltschicht, welche ein flüssigkristallines Medium und mindestens

einen dichroitischen Farbstoff enthält und welche bevorzugt nach dem guest-host-Prinzip schaltet, d.h. von einer verdrillt nematischen Anordnung der Moleküle des flüssigkristallinen Mediums zu einer homeotropen Anordnung. Derartige Schaltschichten sind insbesondere in den Anmeldungen WO 2014/135240 und WO 2014/180525 im Detail beschrieben.

Des Weiteren beinhaltet die vorliegende Erfindung ein Fensterelement umfassend ein Schaltelement der vorstehend beschriebenen Art. Im Rahmen der vorliegenden Erfindung bedeutet der Begriff "Fensterelement" eine lichtdurchlässige Komponente eines Fensters, d.h. eine Glasscheibe eines ein- oder mehrfach verglasten Fensters, welches vorzugsweise Teil einer Gebäudewand ist. Die Glasscheibe weist eine den eintreffenden parallelen Lichtstrahlen zugewandte Seite (Außenseite), und eine von den eintreffenden parallelen Lichtstrahlen abgewandte Seite (Innenseite) auf. Das Schaltelement der vorstehend beschriebenen Art kann auf der Außen- oder Innenseite des erfindungsgemäßen Fensterelements angeordnet sein.

Das erfindungsgemäße Schaltelement kann jedoch nicht nur in einem Fenster eingesetzt werden, sondern auch im Innenbereich von Räumen, beispielsweise in Trennwänden zwischen Räumen und Elementen zur Abtrennung von einzelnen Kompartimenten von Räumen. In diesem Fall kann durch die Blickdichtigkeit (privacy), die durch das Schalten des Schaltelements von streuend nach klar erzielt wird, eine visuelle Barriere zwischen den Raumteilen erzeugt werden.

Ferner kann das Schaltelement der vorstehend beschriebenen Art in einem vorgehängten Fassadenelement verbaut werden, wobei das vorgehängte Fassadenelement vor der Außenseite des Fensters angeordnet ist. Dadurch werden einfallende parallele Lichtstrahlen in einer größeren Entfernung von einem Beobachter gestreut, der sich in einem an die Innenseite des Fensters anschließenden Raum befindet. Durch die größere Entfernung steigt die Wahrscheinlichkeit, dass unter kleinen Streuwinkeln gestreutes Licht am Beobachter vorbeiläuft und ihn folglich nicht blendet.

**Messverfahren**

Die Messung der in der vorliegenden Erfindung verwendeten Werte für die Lichtintensitäten erfolgt in einem UV/VIS/NIR Spektrometer Perkin Elmer Lambda 1050 mit 150mm Integrationskugel (Ulbrichtkugel). Die Werte für die Transmissionsintensitäten werden jeweils gemittelt über den spektralen Bereich von 380 bis 780 nm bestimmt. Unter "gemittelt" wird dabei numerisch gemittelt verstanden.

Zur Messung der Transmissionsintensität der Großwinkelstreuung $I_{\geq 2,5°}$ wird die Probe direkt am Probenhalter der Integrationskugel montiert. Die Integrationskugel ist geöffnet. Austretendes Licht wird in einer Lichtfalle, d.h. in einem nicht-reflektierenden schwarzen Medium, z.B. in einem schwarzen, nicht-reflektierenden Tuch, gesammelt, so dass Licht mit einem Öffnungswinkel kleiner 2,5° die Kugel verlässt und nicht mehr in die Messung eingeht.

Der tatsächlich bei den Messungen vorliegende Öffnungswinkel der Integrationskugel beträgt 4,8°, so dass in den durchgeführten Versuchen eine $T_D$ für Großwinkelstreuung von mindestens 4,8° ermittelt wurde, und nicht eine $T_D$ für Großwinkelstreuung von mindestens 2,5°. Die anspruchsgemäße $T_D$ für Großwinkelstreuung von mindestens 2,5° ist daher etwas größer anzusetzen, mindestens aber genauso groß wie die in den Beispielen gemessene $T_D$ für Großwinkelstreuung von mindestens 4,8°.

Zur Messung der Intensität der Gesamttransmission $I_g$ wird die Probe direkt am Probenhalter am Eingang der Integrationskugel montiert. Die Integrationskugel (Ulbrichtkugel) ist geschlossen und führt alles Licht, das durch die Probe geht, d.h. sowohl ungestreutes als auch gestreutes Licht, zum Detektor.

Aus den beiden oben genannten Werten $I_{\geq 2,5°}$ und $I_g$ kann durch Berechnung eine Transmissionsintensität $I_{Beobachter}$ erhalten werden, nach der Gleichung (1):

$$I_{Beobachter} = I_g - I_{\geq 2,5°} \qquad \text{Gleichung (1)}$$

Zur Messung der Rückwärtsstreuintensität wird die Probe an die geöffnete Ausgangsöffnung der Integrationskugel montiert. Im weiteren Lichtweg hinter der Probe befindet sich eine Lichtfalle. Die Probe bzw. die Proben werden mit Kabeln kontaktiert und mit einer Rechteckspannung in Höhe der beschriebenen Werte versorgt. Licht, das von der Probe reflektiert wird, erreicht über die Integrationskugel den Detektor und wird gemessen. Nicht reflektiertes Licht verlässt die Integrationskugel, ohne den Detektor zu erreichen.

Frei von Streuungen soll im Folgenden ein Wert von $T_d$ kleiner als 3%, vorzugsweise kleiner als 1% bedeuten. Baulich- und fertigungsbedingt durch Spacer und kleinere Schäden im Polyimid, z.B. durch Kratzer beim Reiben, wird in praktischen Ausführungsformen ein Wert für $T_d$ von 0% nie ganz erreichbar sein.

**Ausführungsbeispiele**

Die vorliegende Erfindung wird in den folgenden (Vergleichs-)Beispielen näher erläutert.

In den Schaltschichten der (Vergleichs-)Beispiele werden die Grundmischungen #1, #2, #3 und #4 mit den im

Folgenden aufgelisteten Gewichtsanteilen ihrer Komponenten, d.h. der flüssigkristallinen Moleküle, eingesetzt.

Grundmischung #1 hat eine dielektrische Anisotropie $\Delta\varepsilon$ = -5,7 und besteht aus

13 Gew.% CCN-33,
10 Gew.% CZY-3-02,
10 Gew.% CZY-4-02,
10 Gew.% CZY-5-02,
4 Gew.% CCZY-3-02,
14 Gew.% PTY-3-02,
14 Gew.% PTY-5-02,
5 Gew.% CPTY-3-01,
5 Gew.% CPTY-3-02,
5 Gew.% CPTY-3-03,
8 Gew.% CP-3-01 und
2 Gew.% CGPC-3-3.

Grundmischung #2 hat eine dielektrische Anisotropie $\Delta\varepsilon$ = + 41,8, eine Brechungsindexanisotropie $\Delta n$ = 0,2574 und einen Klärpunkt von 92 °C und besteht aus

- 9 Gew.% PZG-2-N,
- 10 Gew.% PZG-3-N,
- 14 Gew.% PZG-4-N,
- 2 Gew.% PZG-5-N,
- 2 Gew.% CP-3-N,
- 20 Gew.% PPTUI-3-2
- 28 Gew.% PPTUI-3-4 und
- 3 Gew.% CGPC-3-3.

Grundmischung #3 hat eine dielektrische Anisotropie $\Delta\varepsilon$ = + 11,3, eine Brechungsindexanisotropie $\Delta n$ = 0,1349 und einen Klärpunkt von 114,5 °C und besteht aus

- 16 Gew.% CP-3-N,
- 16 Gew.% CP-5-N,
- 5 Gew.% CPG-3-F,
- 5 Gew.% CPG-5-F,
- 15 Gew.% CPU-3-F,
- 15 Gew.% CPU-5-F,
- 7 Gew.% CCGU-3-F,
- 4 Gew.% CGPC-3-3,
- 4 Gew.% CGPC-5-3,
- 4 Gew.% CGPC-5-5,
- 3 Gew.% CCZPC-3-3,
- 3 Gew.% CCZPC-3-4 und
- 3 Gew.% CCZPC-3-5.

Grundmischung # 4 hat eine dielektrische Anisotropie $\Delta\varepsilon$ = - 5,0, eine Brechungsindexanisotropie $\Delta n$ = 0,1531 und einen Klärpunkt von 81 °C und besteht aus

- 25 Gew % CY-3-O4
- 9 Gew % CY-5-O2
- 7 Gew% CCY-3-O2
- 4,5 Gew% CCY-3-O3
- 10 Gew % CPY-2-O2
- 10 Gew % CPY-3-O2
- 15 Gew % PYP-2-3
- 10 Gew % PYP-2-4
- 3 Gew % CCP-V-1
- 2 Gew % CPP-3-2

- 3,5 Gew %.PP-1-2V1
- 2 Gew % PGP-2-3,
- 3,5 Gew % PP-1-2V1 und
- 2 Gew % PGP-2-3.

Die chemischen Strukturen der Komponenten der Grundmischungen #2 und #3 wurden bereits explizit angegeben. Die chemischen Strukturen der Komponenten der Grundmischungen #1 und #4 sind in Form von Abkürzungen angegeben, deren Bedeutung in der WO 2012/052100 von Seite 3, Zeile 24 bis Seite 67, Zeile 12 beschrieben wird.

**Vergleichsbeispiel 1**

Ein Vergleichsschaltelement 1 mit der gezeigten Schichtabfolge wird hergestellt.

| |
|---|
| Substratschicht 1 aus Glas |
| Elektrisch leitfähige Schicht 2 aus ITO |
| Orientierungsschicht 3 aus Polyimid; |
| Schaltschicht 4 bestehend aus<br>99,609 Gew.% der Grundmischung #3 und<br>0,391 Gew.% der dichroitischen Farbstoffe D1, D2, und D3, d.h.<br>- 0,077 Gew.% D1,<br>- 0,146 Gew.% D2 und<br>- 0,168 Gew.% D3; |
| Orientierungsschicht 5a aus Polyimid; |
| Elektrisch leitfähige Schicht 5b aus ITO |
| Substratschicht 5c aus Glas |
| Optionale Substratschicht 5d aus Glas |
| Elektrisch leitfähige Schicht 5e aus ITO |
| Orientierungsschicht 6 aus geriebenem Polyimid; |
| Schaltschicht 7 mit identischer Zusammensetzung wie Schaltschicht 4 |
| Orientierungsschicht 8 aus geriebenem Polyimid |
| Elektrisch leitfähige Schicht 9 aus ITO |
| Substratschicht 10 aus Glas |

Die Orientierungsschichten 3 und 6 sowie die Orientierungsschichten 5a und 8 richten die flüssigkristallinen Moleküle in der gleichen Richtung aus, wobei die Orientierungsschicht 5a relativ zur Orientierungsschicht 3 um 90° gedreht ist, und die Orientierungsschicht 8 relativ zur Orientierungsschicht 6 um 90° gedreht ist.
Die Schaltschichten 4 und 7 haben jeweils eine Dicke von 24,5 μm. Die Orientierungsachsen der in den Schaltschichten 4 und 7 enthaltenen flüssigkristallinen Moleküle liegen

- im ausgeschalteten Zustand (U = 0 V) planar mit einem kleinen Pretilt-Winkel, z.B. mit einem Pretilt-Winkel von 1°, aus der jeweiligen Schaltschichtebene zeigend und parallel zu den jeweiligen Reiberichtungen der jeweils angrenzenden Orientierungsschichten, und
- im eingeschalteten Zustand (U = 20 V) senkrecht zur jeweiligen Orientierungsschicht.

Das Vergleichsschaltelement 1 hat eine Transmissionsintensität im Schaltzustand "hell" von 73 % bei einer Spannung von 20 V an den Elektroden der Schaltschichten 4 und 7. Dabei sind die flüssigkristallinen Moleküle in den Schaltschichten 4 und 7 homeotrop orientiert.
Das Vergleichsschaltelement 1 hat eine Transmissionsintensität $I_{Beobachter}$ im Schaltzustand "dunkel" von 15% bei einer Spannung von 0 V an den Elektroden der Schaltschichten 4 und 7. Dabei sind die flüssigkristallinen Moleküle in den Schaltschichten 4 und 7 planar orientiert.
Das Vergleichsschaltelement 1 ist frei von Streuungen (<1%) in beiden Schaltzuständen hell und dunkel und den Zwischenzuständen.

**Vergleichsbeispiel 2**

Ein Vergleichsschaltelement 2 mit der im Folgenden schematisch dargestellten Schichtabfolge wird hergestellt.

| |
|---|
| Substratschicht 11 aus Glas |
| Elektrisch leitfähige Schicht 12 aus ITO |
| Orientierungsschicht 13 aus Polyimid; |
| Schaltschicht 14 bestehend aus<br>99,218 Gew.% der Grundmischung #3 und<br>0,782 Gew.% der dichroitischen Farbstoffe D1, D2, und D3, d.h.<br>- 0,154 Gew.% D1,<br>- 0,292 Gew.% D2 und<br>- 0,336 Gew.% D3; |
| Orientierungsschicht 15 aus Polyimid; |
| Elektrisch leitfähige Schicht 16 aus ITO |
| Substratschicht 17 aus Glas |

Die Orientierungsschicht 13 ist relativ zur Orientierungsschicht 15 um 90° gedreht. Die Schaltschicht 14 hat eine Dicke von 24,5 μm. Die Orientierungsachsen der in der Schaltschicht 14 enthaltenen Moleküle liegen

- im ausgeschalteten Zustand (U = 0 V) planar mit einem kleinen Pretilt-Winkel, z.B. mit einem Pretilt-Winkel von 1°, aus der Schaltschichtebene 14 zeigend und parallel zur den Reiberichtungen der Orientierungsschichten 13 und 15,
- im eingeschalteten Zustand (U = 20 V) senkrecht zur den Orientierungsschichten 13 und 15.

Das Vergleichsschaltelement 2 hat einen Transmissionsintensität im Schaltzustand "hell" von 73 % bei einer Spannung von 20 V an den Elektroden der Schaltschicht 14. Dabei sind die flüssigkristallinen Moleküle in der Schaltschicht 14 homeotrop orientiert.
Das Vergleichsschaltelement 2 hat eine gemessene Transmissionsintensität $I_{Beobachter}$ im Schaltzustand "dunkel" von 42% bei einer Spannung von 0 V an den Elektroden der Schaltschicht 14. Dabei sind die Moleküle in der Schaltschicht 14 planar orientiert.
Das Vergleichsschaltelement 2 ist frei von Streuungen (<1%) in beiden Schaltzuständen hell und dunkel und den Zwischenzuständen.

**Vergleichsbeispiel 3**

Ein Vergleichsschaltelement 3 mit der im Folgenden schematisch dargestellten Schichtabfolge wird hergestellt.

| |
|---|
| Substratschicht 11 aus Glas |
| Elektrisch leitfähige Schicht 12 aus ITO |
| Orientierungsschicht 13' aus geriebenem planar orientierendem Polyimid mit einem Pretilt-Winkel von 5° |
| Schaltschicht 14' bestehend aus<br>95,23 Gew.% der Grundmischung #3, |
| 3,91 Gew.% der dichroitischen Farbstoffe D1, D2, und D3, d.h.<br>0,77 Gew.% D1, 1,46 Gew.% D2 und 1,68 Gew.% D3,<br>0,86 Gew.% chiralem Dotierstoff S-811 |
| Orientierungsschicht 15' aus geriebenem planar orientierendem Polyimid mit einem Pretilt-Winkel von 5°, wobei die Reibrichtung in einem Winkel von 240° zur Reibrichtung der Orientierungsschicht 13' verläuft |

(fortgesetzt)

| |
|---|
| Elektrisch leitfähige Schicht 16 aus ITO |
| Substratschicht 17 aus Glas |

Die Schaltschicht 14' hat eine Dicke von 5 μm. Die Orientierungsachsen der in der Schaltschicht 14' enthaltenen flüssigkristallinen Moleküle liegen

- im ausgeschalteten Zustand (U = 0 V) planar mit einem Pretilt-Winkel von 5° aus der Schaltschichtebene 14' zeigend und parallel zur den Reiberichtungen der Orientierungsschichten 13' und 15',
- im eingeschalteten Zustand (U = 12 V) senkrecht zur den Orientierungsschichten 13' und 14'.

Das Vergleichsschaltelement 3 hat eine Transmissionsintensität im Schaltzustand "hell" von 74 % Dabei sind die flüssigkristallinen Moleküle in der Schaltschicht 14' homeotrop orientiert.
Das Vergleichsschaltelement 3 hat eine Transmissionsintensität $I_{Beobachter}$ im Schaltzustand "dunkel" von 22 %. Dabei sind die flüssigkristallinen Moleküle in der Schaltschicht 14' planar orientiert.
Das Vergleichsschaltelement 3 ist frei von Streuungen (<1%) in beiden Schaltzuständen hell und dunkel und den Zwischenzuständen.

## Beispiel 1

Ein erfindungsgemäßes Schaltelement 1 hat die weiter unten schematisch dargestellte Schichtabfolge und enthält eine erfindungsgemäße Schaltschicht $S_1$ in den in Tabelle 1 dargestellten Ausführungsformen a), b) oder c). Dabei bedeuten

- "Gm#2" und "Gm#3" Grundmischung #2, bzw. Grundmischung #3,
- "S-5011" den chiralen Dotierstoff S-5011,
- "Lambda" die geschätzte Reflexionswellenlänge und
- "antiparallel gerieben planar" planar orientiert mit kleinen Tilt-Winkeln, womit die Orientierungen in den an die Schaltschicht $S_1$ angrenzenden Orientierungsschichten 20 und 21 gemeint sind, und wobei die Tilt-Winkel auf den Orientierungsschichten 20 und 21 um 180° zueinander gedreht vorliegen,
- "Spannung" die Schaltspannung der Schaltschicht $S_1$ im klaren bzw. trüben Zustand, wobei "klar" den Schaltzustand "hell" und "trüb" den Schaltzustand "dunkel" meint, und wobei im Schaltzustand "trüb" die flüssigkristallinen Moleküle der Schaltschicht $S_1$ in einem in Polydomänen ausgerichteten Zustand vorliegen, der visuell ein homogenes Erscheinungsbild hat, aber unter dem Mikroskop unterschiedliche Strukturierungen aufweisen kann.

Tabelle 1-1 zeigt Schaltzustände und Schaltspannungen im Schaltelement 1 in den Ausführungsformen a), b) und c), wobei sich die Schaltschichten S4 und S7 in den Zuständen "hell" oder "dunkel" und die Schaltschicht $S_1$ in den Zuständen "klar" oder "trüb" befinden.

Tabelle 1: Ausführungsformen der Schaltschicht $S_1$

| | Schichtdicke [μm] | vorwärtsstreuendes flüssigkristallines Medium | Ganghöhe [μm] | Lambda [nm] | Orientierung des Polyimids | Spannung klar [V] | trüb [V] |
|---|---|---|---|---|---|---|---|
| a) | 7 | 99,28 Gew.% Gm#2<br>0,72 Gew.% S-5011 | 1,5 | 2070 | homeotrop | 10 | 6 |
| b) | 23 | 99,46 Gew.% Gm#2<br>0,54 Gew.% S-5011 | 2,0 | 3290 | anti parallel gerieben planar | 25 | 3 |
| c) | 23 | 99,73 Gew.% Gm#3<br>0,27 Gew.% S-5011 | 4,0 | 6250 | anti parallel gerieben planar | 25 | 5 |

Tabelle 1-1: Schaltzustände und Schaltspannungen im Schaltelement 1

| | | Schaltzustand in S4 und S7 | Spannung in S4 und S7 | Schaltzustand in $S_1$ | Spannung in $S_1$ |
|---|---|---|---|---|---|
| a) | 1 | hell | 12 V | klar | 10 V |
| | 2 | hell | 12 V | trüb | 6V |
| | 3 | dunkel | 0 V | klar | 10 V |
| | 4 | dunkel | 0 V | trüb | 6 V |
| | | | | | |
| b) | 1 | hell | 12 V | klar | 25 V |
| | 2 | hell | 12 V | trüb | 3 V |
| | 3 | dunkel | 0 V | klar | 25 V |
| | 4 | dunkel | 0 V | trüb | 3 V |
| | | | | | |
| c) | 1 | hell | 12 V | klar | 25 V |
| | 2 | hell | 12 V | trüb | 5 V |
| | 3 | dunkel | 0 V | klar | 25 V |
| | 4 | dunkel | 0 V | trüb | 5V |

Schichtabfolge von Schaltelement 1

| |
|---|
| Substratschicht 1 aus Glas |
| Elektrisch leitfähige Schicht 2 aus ITO |
| Orientierungsschicht 3 aus Polyimid; |
| Schaltschicht 4 bestehend aus<br>99,609 Gew.% der Grundmischung #3 und<br>0,391 Gew.% der dichroitischen Farbstoffe D1, D2, und D3, d.h.<br>- 0,077 Gew.% D1,<br>- 0,146 Gew.% D2 und<br>- 0,168 Gew.% D3; |
| Orientierungsschicht 5a aus Polyimid; |
| Elektrisch leitfähige Schicht 5b aus ITO |
| Substratschicht 5c aus Glas |
| Optionale Substratschicht 5d aus Glas |
| Elektrisch leitfähige Schicht 5e aus ITO |
| Orientierungsschicht 6 aus geriebenem Polyimid; |
| Schaltschicht 7 mit identischer Zusammensetzung wie Schaltschicht 4 |
| Orientierungsschicht 8 aus geriebenem Polyimid |
| Elektrisch leitfähige Schicht 9 aus ITO |
| Substratschicht 10 aus Glas |
| Substratschicht 18 aus Glas |
| Elektrisch leitfähige Schicht 19 aus ITO |
| Orientierungsschicht 20 aus Polyimid |

(fortgesetzt)

| |
|---|
| Schaltschicht $S_1$ mit vorwärtsstreuendem flüssigkristallinen Medium in einer der in Tabelle 1 dargestellten Ausführungsformen a), b) oder c) |
| Orientierungsschicht 21 aus Polyimid |
| Elektrisch leitfähige Schicht 22 aus ITO |
| Substratschicht 23 aus Glas |

Das Schaltelement 1 hat in der Ausführungsform c)

- eine Transmissionsintensität im Schaltzustand 1 von 78 %,
- eine Transmissionsintensität $I_{Beobachter}$ im Schaltzustand 4 von 9 % und
- eine Transmissionsintensität $I_g$ im Schaltzustand 4 von 14 %.

Dabei wird das Schaltelement 1 mit parallelen Lichtstrahlen auf die Substratschicht 1 bestrahlt.

Somit werden in Schaltelement 1 im geschalteten Zustand der streuenden Schaltschicht {1 - (9/14)}·100 = 36 % der Lichtstrahlen aus ihrer ursprünglich parallelen Richtung abgelenkt durch Streuung von mehr als 2,5°. Im Schaltzustand "trüb" liegen die Moleküle der Schaltschicht $S_1$ in einem in Polydomänen ausgerichteten Zustand vor.
Die entsprechenden Untersuchungen wurden auch für die Versionen a) und b) der Schaltschicht durchgeführt. Dabei wurden, mit geringen Abweichungen, die gleichen Werte für die diffusive Transmission im streuenden Zustand gemessen wie für die oben explizit beschriebene Version c).

**Beispiel 2a)**

Ein erfindungsgemäßes Schaltelement 2a) enthält eine erfindungsgemäße 24,5 µm dicke Schaltschicht $S_{2a)}$ in der gezeigten Schichtabfolge:

| |
|---|
| Substratschicht 1 aus Glas |
| Elektrisch leitfähige Schicht 2 aus ITO |
| Orientierungsschicht 3 aus Polyimid; |
| Schaltschicht $S_{2a)}$ bestehend aus<br>99,34 Gew.% der Grundmischung #3<br>0,27 Gew.-% chiralem Dotierstoff S-5011 und<br>0,39 Gew.% der dichroitischen Farbstoffe D1, D2, und D3, d.h.<br>0,077 Gew.% D1, 0,146 Gew.% D2 und 0,168 Gew.% D3; |
| Orientierungsschicht 5a aus Polyimid; |
| Elektrisch leitfähige Schicht 5b aus ITO |
| Substratschicht 5c aus Glas |
| Optionale Substratschicht 5d aus Glas |
| Elektrisch leitfähige Schicht 5e aus ITO |
| Orientierungsschicht 6 aus Polyimid |
| Schaltschicht S7 mit identischer Zusammensetzung wie Schaltschicht S4 |
| Orientierungsschicht 8 aus Polyimid |
| Elektrisch leitfähige Schicht 9 aus ITO |
| Substratschicht 10 aus Glas |

Tabelle 1-2 zeigt Schaltzustände und Schaltspannungen im Schaltelement 2a, wobei sich die Schaltschicht

S7 in den Zuständen "hell" oder "dunkel" und die Schaltschicht $S_{2a}$ in den Zuständen "hell-klar" oder "dunkel-trüb" befinden.

Tabelle 1-2: Schaltzustände und Schaltspannungen im Schaltelement 2a

| | Schaltzustand in S7 | Spannung in S7 | Schaltzustand in $S_{2a}$ | Spannung in $S_{2a}$ |
|---|---|---|---|---|
| 1 | hell | 12 V | hell-klar | 25 V |
| 2 | dunkel | 0 V | hell-klar | 25 V |
| 3 | hell | 12 V | dunkel-trüb | 5 V |
| 4 | dunkel | 0 V | dunkel-trüb | 5 V |

Das Schaltelement 2a) wird mit parallelen Lichtstrahlen auf die Substratschicht 1 bestrahlt und hat

- eine Transmissionsintensität im Schaltzustand 1 von 75 %,
- eine Transmissionsintensität $I_{Beobachter}$ im Schaltzustand 4 von 16 %, und
- eine Transmissionsintensität $I_g$ im Schaltzustand 4 von 28 % gemessen an der Ulbrichtkugel, d.h. mit Streulicht.

Somit werden in Schaltelement 2a im geschalteten Zustand der streuenden Schaltschicht $\{1 - (16/28)\} \cdot 100 = 43$ % der Lichtstrahlen aus ihrer ursprünglich parallelen Richtung abgelenkt durch Streuung von mehr als 2,5°. Im Schaltzustand "dunkel-trüb" liegen die Moleküle der Schaltschicht $S_{2a)}$ in einem in Polydomänen ausgerichteten Zustand vor.

**Beispiel 2b)**

Ein erfindungsgemäßes Schaltelement 2b) enthält eine erfindungsgemäße 25 μm dicke Schaltschicht $S_{2b}$ in der weiter unten schematisch dargestellten Schichtabfolge.
Tabelle 1-3 zeigt Schaltzustände und Schaltspannungen im Schaltelement 2b, wobei sich die Schaltschicht S4 in den Zuständen "hell" oder "dunkel" und die Schaltschicht $S_{2b}$ in den Zuständen "hell-klar" oder "dunkel-trüb" befindet.

Tabelle 1-3: Schaltzustände und Schaltspannungen im Schaltelement 2b

| | Schaltzustand in S4 | Spannung in S4 | Schaltzustand in $S_{2b}$ | Spannung in $S_{2b}$ |
|---|---|---|---|---|
| 1 | hell | 12 V | hell-klar | 25 V |
| 2 | dunkel | 0 V | hell-klar | 25 V |
| 3 | hell | 12 V | dunkel-trüb | 5 V |
| 4 | dunkel | 0 V | dunkel-trüb | 5 V |

| |
|---|
| Substratschicht 1 aus Glas |
| Elektrisch leitfähige Schicht 2 aus ITO |
| Orientierungsschicht 3 aus Polyimid; |
| Schaltschicht 4 bestehend aus<br>99,609 Gew.% der Grundmischung #3 und<br>0,391 Gew.% der dichroitischen Farbstoffe D1, D2, und D3, d.h.<br>0,077 Gew.% D1, 0,146 Gew.% D2 und 0,168 Gew.% D3; |
| Orientierungsschicht 5a aus Polyimid; |
| Elektrisch leitfähige Schicht 5b aus ITO |
| Substratschicht 5c aus Glas |
| Optionale Substratschicht 5d aus Glas |
| Elektrisch leitfähige Schicht 5e aus ITO |
| Orientierungsschicht 6 aus PI |

(fortgesetzt)

| |
|---|
| Schaltschicht $S_{2b)}$ bestehend aus<br>99,34 Gew.% der Grundmischung #3<br>0,27 Gew.-% chiralem Dotierstoff S-5011 und<br>0,39 Gew.% der dichroitischen Farbstoffe D1, D2, und D3, d.h.<br>0,077 Gew.% D1, 0,146 Gew.% D2 und 0,168 Gew.% D3; |
| Orientierungsschicht 8 aus PI |
| Elektrisch leitfähige Schicht 9 aus ITO |
| Substratschicht 10 aus Glas |

Das Schaltelement 2b) wird mit parallelen Lichtstrahlen auf der Substratschicht 1 bestrahlt und hat

- eine Transmissionsintensität im Schaltzustand 1 von 75 %,
- eine Transmissionsintensität $I_{Beobachter}$ im Schaltzustand 4 von 16 %, und
- eine Transmissionsintensität $I_g$ im Schaltzustand 4 von 28 %.

Somit werden in Schaltelement 2b im geschalteten Zustand der streuenden Schaltschicht $\{1 - (16/28)\}\cdot 100 = 43\%$ der Lichtstrahlen aus ihrer ursprünglich parallelen Richtung abgelenkt durch Streuung von mehr als 2,5°.
Im Schaltzustand "dunkel-trüb" liegen die Moleküle der Schaltschicht $S_{2b)}$ in einem in Polydomänen ausgerichteten Zustand vor.

**Beispiel 2c)**

Ein erfindungsgemäßes Schaltelement 2c) enthält zwei erfindungsgemäße, jeweils 25 μm dicke Schaltschichten $S_{2c1}$ und $S_{2c2}$ in der im Folgenden schematisch dargestellten Schichtabfolge.

| |
|---|
| Substratschicht 1 aus Glas |
| Elektrisch leitfähige Schicht 2 aus ITO |
| Orientierungsschicht 3 aus Polyimid; |
| Schaltschicht $S_{2c1}$ bestehend aus<br>99,34 Gew.% der Grundmischung #3<br>0,27 Gew.-% chiralem Dotierstoff S-5011 und<br>0,39 Gew.% der dichroitischen Farbstoffe D1, D2, und D3, d.h.<br>0,077 Gew.% D1, 0,146 Gew.% D2 und 0,168 Gew.% D3; |
| Orientierungsschicht 5 aus Polyimid; |
| Elektrisch leitfähige Schicht aus ITO |
| Substratschicht aus Glas |
| Optionale weitere Substratschicht aus Glas |
| Elektrisch leitfähige Schicht aus ITO |
| Orientierungsschicht 6 aus geriebenem Polyimid; |
| Schaltschicht $S_{2c2}$ bestehend aus<br>99,34 Gew.% der Grundmischung #3<br>0,27 Gew.-% chiralem Dotierstoff S-5011 und<br>0,39 Gew.% der dichroitischen Farbstoffe D1, D2, und D3, d.h.<br>0,077 Gew.% D1, 0,146 Gew.% D2 und 0,168 Gew.% D3; |
| Orientierungsschicht 8 aus geriebenem Polyimid |

(fortgesetzt)

| |
|---|
| Elektrisch leitfähige Schicht 9 aus ITO |
| Substratschicht 10 aus Glas |

Das Schaltelement 2c) wird mit parallelen Lichtstrahlen bestrahlt, die senkrecht auf der Substratschicht 1 eintreffen.

Es werden die folgenden Schaltzustände geschaltet:

Schaltzustand-1: An beiden Schaltschichten $S_{2c1}$ und $S_{2c2}$ liegt jeweils 25V Spannung an. Die Transmissionsintensität ist in diesem Schaltzustand 76%. Beide Schaltschichten befinden sich im Zustand "hell-klar".

Schaltzustand-2: An einer der Schaltschichten $S_{2c1}$ oder $S_{2c2}$ liegen 25V und an der verbleibenden Schaltschicht $S_{2c1}$ oder $S_{2c2}$ 5V Spannung an. Die Transmissionsintensität ist in diesem Schaltzustand 27% ohne Streulicht. In diesem Zustand befindet sich eine der beiden Schaltschichten im Zustand "hell-klar", und die andere befindet sich im Zustand "dunkel-trüb".

Schaltzustand-3: An beiden Schaltschichten $S_{2c1}$ und $S_{2c2}$ liegen jeweils 5V Spannung an. Die Transmissionsintensität $I_{Beobachter}$ ist in diesem Schaltzustand 11%. Beide Schaltschichten befinden sich im Zustand "dunkel-trüb".

Für den Schaltzustand-3 wird eine $I_g$ von 16% gemessen.
Somit werden in Schaltelement 2c im geschalteten Zustand der streuenden Schaltschicht {1 - (11/16)}·100 = 31 % der Lichtstrahlen aus ihrer ursprünglich parallelen Richtung abgelenkt durch Streuung von mehr als 2,5°.
Im Schaltzustand "dunkel-trüb" liegen die Moleküle der Schaltschicht $S_{2c1}$ und $S_{2c2}$ in einem in Polydomänen ausgerichteten Zustand vor.

**Beispiel 2d)**

Ein erfindungsgemäßes Schaltelement 2d) enthält zwei erfindungsgemäße, jeweils 25 µm dicke Schaltschichten $S_{2d1}$ und $S_{2d2}$ in der im Folgenden schematisch dargestellten Schichtabfolge.

| |
|---|
| Substratschicht 1 aus Glas |
| Elektrisch leitfähige Schicht 2 aus ITO |
| Orientierungsschicht 3 aus Polyimid; |
| Schaltschicht $S_{2d1}$ bestehend aus<br>99,73 Gew.% der Grundmischung #3<br>0,27 Gew.-% chiralem Dotierstoff S-5011 und |
| Orientierungsschicht 5 aus Polyimid; |
| Elektrisch leitfähige Schicht aus ITO |
| Substratschicht aus Glas |
| Optionale weitere Substratschicht aus Glas |
| Elektrisch leitfähige Schicht aus ITO |
| Orientierungsschicht 6 aus geriebenem Polyimid; |
| Schaltschicht $S_{2d2}$ bestehend aus<br>99,73 Gew.% der Grundmischung #3<br>0,27 Gew.-% chiralem Dotierstoff S-5011 und |
| Orientierungsschicht 8 aus geriebenem Polyimid |
| Elektrisch leitfähige Schicht 9 aus ITO |
| Substratschicht 10 aus Glas |

Das Schaltelement 2d) wird mit parallelen Lichtstrahlen bestrahlt, die senkrecht auf der Substratschicht 1 eintreffen.

Schaltzustand-1: An beiden Schaltschichten $S_{2d1}$ und $S_{2d2}$ liegt jeweils 25V Spannung an. Die Transmissionsintensität ist in diesem Schaltzustand 79%. Beide Schaltschichten befinden sich im Zustand "klar". Schaltzustand-2: An beiden Schaltschichten $S_{2d1}$ und $S_{2d2}$ liegen jeweils 5V Spannung an. Die Transmissionsintensität $I_{Beobachter}$ ist in diesem Schaltzustand 59%. Beide Schaltschichten befinden sich im Zustand "trüb".

Für den Schaltzustand-3 wird eine $I_g$ von 79% gemessen.

Somit werden in Schaltelement 2d im geschalteten Zustand der streuenden Schaltschicht {1 - (59/79)}·100 = 25 % der Lichtstrahlen aus ihrer ursprünglich parallelen Richtung abgelenkt durch Streuung von mehr als 2,5°. Im Schaltzustand "trüb" liegen die Moleküle der Schaltschicht $S_{2d1}$ und $S_{2d2}$ in einem in Polydomänen ausgerichteten Zustand vor.

**Beispiel 3**

Ein erfindungsgemäßes Schaltelement 3 hat die weiter unten schematisch dargestellte Schichtabfolge und enthält eine erfindungsgemäße Schaltschicht $S_3$ in den in Tabelle 2 dargestellten Ausführungsformen a), b) und c). Dabei bedeuten

- "Gm#2" und "Gm#3" Grundmischung #2, bzw. Grundmischung #3,
- "S-5011" den chiralen Dotierstoff S-5011,
- "Lambda" die geschätzte Reflexionswellenlänge und
- "antiparallel gerieben planar" planar orientiert mit kleinem Tilt-Winkel, womit die Orientierungen in den an die Schaltschicht $S_3$ angrenzenden Orientierungsschichten 20 und 21 gemeint sind, und wobei die Tilt-Winkel auf den Orientierungsschichten 20 und 21 um 180° zueinander gedreht vorliegen,
- "Spannung" die Schaltspannung der Schaltschicht $S_3$ im klaren bzw. trüben Zustand, wobei im Schaltzustand "trüb" die Moleküle der Schaltschicht $S_3$ in einem in Polydomänen ausgerichteten Zustand vorliegen.

Tabelle 1-4 zeigt Schaltzustände und Schaltspannungen im Schaltelement 3 in den Ausführungsformen a), b) und c), wobei sich die Schaltschicht 14 in den Zuständen "hell" oder "dunkel" und die Schaltschicht $S_3$ in den Zuständen "klar" oder "trüb" befinden.

Tabelle 2:

| | Schichtdicke [μm] | vorwärtsstreuendes flüssigkristallines Medium | Ganghöhe [μm] | Lambda [nm] | Orientierung des Polyimids | Spannung klar [V] | trüb [V] |
|---|---|---|---|---|---|---|---|
| a) | 7 | 99,28 Gew.% Gm#2<br>0,72 Gew.% S-5011 | 1,5 | 2070 | homeotrop | 10 | 6 |
| b) | 23 | 99,46 Gew.% Gm#2<br>0,54 Gew.% S-5011 | 2,0 | 3290 | antiparallel gerieben planar | 23 | 8 |
| c) | 23 | 99,73 Gew.% Gm#3<br>0,27 Gew.% S-5011 | 4,0 | 6250 | antiparallel gerieben planar | 25 | 5 |

Tabelle 1-4: Schaltzustände und Schaltspannungen im Schaltelement 3

| | | Schaltzustand in S14 | Spannung in S14 | Schaltzustand in $S_3$ | Spannung in $S_3$ |
|---|---|---|---|---|---|
| a) | 1 | hell | 12 V | klar | 10 V |
| | 2 | hell | 12 V | trüb | 6 V |
| | 3 | dunkel | 0 V | klar | 10 V |
| | 4 | dunkel | 0 V | trüb | 6 V |
| | | | | | |

(fortgesetzt)

| | | Schaltzustand in S14 | Spannung in S14 | Schaltzustand in $S_3$ | Spannung in $S_3$ |
|---|---|---|---|---|---|
| b) | 1 | hell | 12 V | klar | 23 V |
| | 2 | hell | 12 V | trüb | 8 V |
| | 3 | dunkel | 0 V | klar | 23 V |
| | 4 | dunkel | 0 V | trüb | 8 V |
| | | | | | |
| c) | 1 | hell | 12 V | klar | 25 V |
| | 2 | hell | 12 V | trüb | 5 V |
| | 3 | dunkel | 0 V | klar | 25 V |
| | 4 | dunkel | 0 V | trüb | 5 V |

Schichtabfolge von Schaltelement 3

| |
|---|
| Substratschicht 11 aus Glas |
| Elektrisch leitfähige Schicht 12 aus ITO |
| Orientierungsschicht 13 aus Polyimid; |
| Schaltschicht 14 bestehend aus<br>99,218 Gew.% der Grundmischung #3 und<br>0,782 Gew.% der dichroitischen Farbstoffe D1, D2, und D3, d.h.<br>0,154 Gew.% D1, 0,292 Gew.% D2 und 0,336 Gew.% D3; |
| Orientierungsschicht 15 aus Polyimid; |
| Elektrisch leitfähige Schicht 16 aus ITO |
| Substratschicht 17 aus Glas |
| Optionale Substratschicht 18 aus Glas |
| Elektrisch leitfähige Schicht 19 aus ITO |
| Orientierungsschicht 20 aus Polyimid |
| Schaltschicht $S_3$ mit flüssigkristallinen Medium<br>in einer der in Tabelle 2 dargestellten Ausführungsformen a), b) oder c) |
| Orientierungsschicht 21 aus Polyimid |
| Elektrisch leitfähige Schicht 22 aus ITO |
| Substratschicht 23 aus Glas |

Das Schaltelement 3 hat in der Ausführungsform c)

- eine Transmissionsintensität im Schaltzustand 1 von 74 %,
- eine Transmissionsintensität $I_{Beobachter}$ im Schaltzustand 4 von 23 % und
- eine Transmissionsintensität $I_g$ im Schaltzustand 4 von 41 %.

Dabei wird das Schaltelement 3 mit parallelen Lichtstrahlen auf die Substratschicht 11 bestrahlt.
Somit werden in Schaltelement 3 im geschalteten Zustand der streuenden Schaltschicht {1 - (23/41)}·100 = 44 % der Lichtstrahlen aus ihrer ursprünglich parallelen Richtung abgelenkt durch Streuung von mehr als 2,5°.
Im Schaltzustand "trüb" liegen die Moleküle der Schaltschicht $S_3$ in einem in Polydomänen ausgerichteten Zustand vor.
Die entsprechenden Untersuchungen wurden auch für die Versionen a) und b) der Schaltschicht durchgeführt. Dabei wurden, mit geringen Abweichungen, die gleichen Werte für die diffusive Transmission im streuenden Zustand gemessen

wie für die oben explizit beschriebene Version c).

**Beispiel 3a**

Ein erfindungsgemäßes Schaltelement 3a enthält die erfindungsgemäßen Schaltschichten 14 und $S_3$ in der im Folgenden schematisch dargestellten Schichtabfolge.

| |
|---|
| Substratschicht 11 aus Glas |
| Elektrisch leitfähige Schicht 12 aus ITO |
| Orientierungsschicht 13 aus Polyimid; |
| Schaltschicht 14 bestehend aus<br>99,34 Gew.% der Grundmischung #3<br>0,27 Gew.-% chiralem Dotierstoff S-5011 und<br>0,39 Gew.% der dichroitischen Farbstoffe D1, D2, und D3, d.h.<br>0,077 Gew.% D1, 0,146 Gew.% D2 und 0,168 Gew.% D3; |
| Orientierungsschicht 15 aus Polyimid; |
| Elektrisch leitfähige Schicht 16 aus ITO |
| Substratschicht 17 aus Glas |
| Optionale Substratschicht 18 aus Glas |
| Elektrisch leitfähige Schicht 19 aus ITO |
| Orientierungsschicht 20 aus Polyimid |
| Schaltschicht $S_3$ mit flüssigkristallinen Medium<br>in einer der in Tabelle 2 von Beispiel 3 dargestellten Ausführungsformen a), b) oder c) |
| Orientierungsschicht 21 aus Polyimid |
| Elektrisch leitfähige Schicht 22 aus ITO |
| Substratschicht 23 aus Glas |

Es werden die folgenden Schaltzustände geschaltet:

| | Schaltzustand in S14 | Spannung in S14 | Schaltzustand in $S_3$ | Spannung in $S_3$ |
|---|---|---|---|---|
| 1 | hell-klar | 25 V | hell-klar | 25 V |
| 2 | dunkel-trüb | 5 V | hell-klar | 25 V |
| 3 | hell-klar | 25 V | dunkel-trüb | 5 V |
| 4 | dunkel-trüb | 5 V | dunkel-trüb | 5 V |

Das Schaltelement 3a hat in der Ausführungsform c):

- eine Transmissionsintensität im Schaltzustand 1 von 88 %,
- eine Transmissionsintensität $I_{Beobachter}$ im Schaltzustand 4 von 18 % und
- eine Transmissionsintensität $I_g$ im Schaltzustand 4 von 53 %.

Dabei wird das Schaltelement 3a mit parallelen Lichtstrahlen auf die Substratschicht 11 bestrahlt.
Somit werden in Schaltelement 3a im geschalteten Zustand der streuenden Schaltschicht {1 - (18/53)}·100 = 66 % der Lichtstrahlen aus ihrer ursprünglich parallelen Richtung abgelenkt durch Streuung von mehr als 2,5°.
Im Schaltzustand "dunkel-trüb" liegen die Moleküle der Schaltschicht 14 und $S_3$ in einem in Polydomänen ausgerichteten Zustand vor.

Die entsprechenden Untersuchungen wurden auch für die Versionen a) und b) der Schaltschicht durchgeführt. Dabei wurden, mit geringen Abweichungen, die gleichen Werte für die diffusive Transmission im streuenden Zustand gemessen wie für die oben explizit beschriebene Version c).

## Beispiel 4

Ein erfindungsgemäßes Schaltelement 4 enthält eine erfindungsgemäße 24,5 µm dicke Schaltschicht $S_4$ in der im Folgenden dargestellten Schichtabfolge.

| |
|---|
| Substratschicht 11 aus Glas |
| Elektrisch leitfähige Schicht 12 aus ITO |
| Orientierungsschicht 13 aus Polyimid; |
| Schaltschicht $S_4$ bestehend aus<br>98,95 Gew.% der Grundmischung #3,<br>0,78 Gew.% der dichroitischen Farbstoffe D1, D2, und D3, d.h.<br>0,154 Gew.% D1, 0,292 Gew.% D2 und 0,336 Gew.% D3<br>0,27 Gew.% chiralem Dotierstoff S-5011 |
| Orientierungsschicht 15 aus Polyimid; |
| Elektrisch leitfähige Schicht 16 aus ITO |
| Substratschicht 17 aus Glas |

Das Schaltelement 4 hat

- eine Transmissionsintensität im Schaltzustand "hell-klar" von 74 % (Spannung = 25 V),
- eine Transmissionsintensität $I_{Beobachter}$ im Schaltzustand "dunkel-trüb" von 15 % (Spannung = 5 V) und
- eine Transmissionsintensität $I_g$ im Schaltzustand "dunkel-trüb" von 21 %. Dabei wird das Schaltelement 4 mit parallelen Lichtstrahlen auf die Substratschicht 11 bestrahlt.

Somit werden in Schaltelement 4 im geschalteten Zustand der streuenden Schaltschicht $\{1 - (15/21)\}\cdot 100 = 29$ % der Lichtstrahlen aus ihrer ursprünglich parallelen Richtung abgelenkt durch Streuung von mehr als 2,5°.
Im Schaltzustand "dunkel-trüb" liegen die Moleküle der Schaltschicht $S_4$ in einem in Polydomänen ausgerichteten Zustand vor.

## Beispiel 4b

Ein erfindungsgemäßes Schaltelement 4b enthält eine erfindungsgemäße 24,5 µm dicke Schaltschicht $S_{4b}$ in der im Folgenden dargestellten Schichtabfolge.

| |
|---|
| Substratschicht 11 aus Glas |
| Elektrisch leitfähige Schicht 12 aus ITO |
| Orientierungsschicht 13 aus Polyimid; |
| Schaltschicht $S_{4b}$ bestehend aus<br>99,73 Gew.% der Grundmischung #3,<br>0,27 Gew.% chiralem Dotierstoff S-5011 |
| Orientierungsschicht 15 aus Polyimid; |
| Elektrisch leitfähige Schicht 16 aus ITO |
| Substratschicht 17 aus Glas |

Das Schaltelement 4b hat

- eine Transmissionsintensität im Schaltzustand "klar" von 90 % (Spannung = 25 V),
- eine Transmissionsintensität $I_{Beobachter}$ im Schaltzustand "trüb" von 42 % (Spannung = 5 V) und
- eine Transmissionsintensität $I_g$ im "Schaltzustand "trüb" von 90 %.

Dabei wird das Schaltelement 4b mit parallelen Lichtstrahlen auf die Substratschicht 11 bestrahlt. Somit werden in Schaltelement 4b im geschalteten Zustand der streuenden Schaltschicht {1 - (42/90)}·100 = 53 % der Lichtstrahlen aus ihrer ursprünglich parallelen Richtung abgelenkt durch Streuung von mehr als 2,5°. Im Schaltzustand "trüb" liegen die Moleküle der Schaltschicht $S_{4b}$ in einem in Polydomänen ausgerichteten Zustand vor.

**Beispiel 5**

Ein erfindungsgemäßes Schaltelement 5 enthält eine erfindungsgemäße Schaltschicht Ss in der folgenden Schichtabfolge:

| |
|---|
| Substratschicht 11 aus Glas |
| Elektrisch leitfähige Schicht 12 aus ITO |
| Orientierungsschicht 13' aus geriebenem planar orientierendem Polyimid mit einem Pretilt-Winkel von 5° |
| Schaltschicht 14' bestehend aus<br>95,23 Gew.% der Grundmischung #3,<br>3,91 Gew.% der dichroitischen Farbstoffe D1, D2, und D3, d.h.<br>0,77 Gew.% D1, 1,46 Gew.% D2 und 1,68 Gew.% D3,<br>0,86 Gew.% chiralem Dotierstoff S-811 |
| Orientierungsschicht 15' aus geriebenem planar orientierendem Polyimid mit einem Pretilt-Winkel von 5°, wobei die Reibrichtung in einem Winkel von 240° zur Reibrichtung der Orientierungsschicht 13' verläuft |
| Elektrisch leitfähige Schicht 16 aus ITO |
| Substratschicht 17 aus Glas |
| Substratschicht 24 aus Glas |
| Elektrisch leitfähige Schicht aus ITO |
| Orientierungsschicht 25 aus Polyimid (antiparallel gerieben planar) mit kleinem Tilt-Winkel |
| Schaltschicht Ss bestehend aus<br>99,73 Gew.% Grundmischung #3 und<br>0,27 Gew.% chiralem Dotierstoff S-5011 |
| Orientierungsschicht 26 aus Polyimid (antiparallel gerieben planar) mit kleinem Tilt-Winkel |
| Elektrisch leitfähige Schicht aus ITO |
| Substratschicht 27 aus Glas |

Die Schaltschicht 14' hat dabei eine Schichtdicke von 5 µm.
Es werden die folgenden Schaltzustände geschaltet:

| | Schaltzustand in S14' | Spannung in S14' | Schaltzustand in $S_5$ | Spannung in $S_5$ |
|---|---|---|---|---|
| 1 | hell | 12 V | klar | 25 V |
| 2 | dunkel | 0 V | klar | 25 V |
| 3 | hell | 12 V | trüb | 5 V |
| 4 | dunkel | 0 V | trüb | 5 V |

Das Schaltelement 5 hat

- eine Tränsmissionsintensität im Schaltzustand 1 von 74 %,
- eine Transmissionsintensität $I_{Beobachter}$ im Schaltzustand 4 von 14 % und
- eine Transmissionsintensität $I_g$ im Schaltzustand 4 von 23 %.

Dabei wird das Schaltelement 5 mit parallelen Lichtstrahlen auf die Substratschicht 11 bestrahlt.

Somit werden in Schaltelement 5 im geschalteten Zustand der streuenden Schaltschicht {1 - (14/23)}·100 = 39 % der Lichtstrahlen aus ihrer ursprünglich parallelen Richtung abgelenkt durch Streuung von mehr als 2,5°. Im Schaltzustand "trüb" liegen die Moleküle der Schaltschicht $S_5$ in einem in Polydomänen ausgerichteten Zustand vor.

**Vergleichsbeispiel 6**

Ein Schaltelement 6 enthält eine 25 µm dicke Schaltschicht $S_6$ in der im Folgenden schematisch dargestellten Schichtabfolge.

| |
|---|
| Substratschicht 28 aus Glas |
| Elektrisch leitfähige Schicht 29 aus ITO |
| Orientierungsschicht 30 aus homeotrop orientierendem Polyimid |
| Schaltschicht $S_6$ bestehend aus nematisch angeordneten Molekülen (Komponente a)) und einem Polymeranteil (Komponenten b) und c)) mit den Gewichtsanteilen<br>a) 83,93 Gew.% der Grundmischung #1 ($\Delta\varepsilon$ = -5,7)<br>b) 15,99 Gew.% des reaktiven Mesogens RM82 und<br>c) 0,08 Gew.% des Photoinitiators Irgacure 651 |
| Orientierungsschicht 31 aus aus homeotrop orientierendem Polyimid |
| Elektrisch leitfähige Schicht 32 aus ITO |
| Substratschicht 33 aus Glas |

Zur Herstellung der Schaltschicht $S_6$ wird die Grundmischung #1, das reaktive Mesogen RM82 und der Photoinitiator Irgacure 651 im o.g. Gewichtsverhältnis gemischt und 3 Minuten lang photopolymerisiert.

Das Schaltelement 6 hat

- eine Transmissionsintensität im Schaltzustand "klar" von 90 %,
- eine Transmissionsintensität $I_{Beobachter}$ im Schaltzustand "trüb" von 45 % und
- eine Transmissionsintensität $I_g$ im Schaltzustand "trüb" von 87 %.

Die Schaltspannung für den Schaltzustand "trüb" beträgt 150 V. Dabei wird das Schaltelement 6 mit parallelen Lichtstrahlen auf die Substratschicht 28 bestrahlt. Es werden in Schaltelement 6 im geschalteten Zustand der streuenden Schaltschicht {1 - (45/87)}·100 = 48 % der Lichtstrahlen aus ihrer ursprünglich parallelen Richtung abgelenkt durch Streuung von mehr als 2,5°.

**Vergleichsbeispiel 7**

Ein Schaltelement 7 enthält eine Schaltschicht $S_7$ in der im Folgenden schematisch dargestellten Schichtabfolge.

| |
|---|
| Substratschicht 28 aus Glas |
| Elektrisch leitfähige Schicht 29 aus ITO |
| Orientierungsschicht 30 aus homeotrop orientierendem Polyimid |

(fortgesetzt)

| |
|---|
| Schaltschicht $S_7$ bestehend aus nematisch angeordneten Molekülen (Komponente a)) und einem Polymeranteil (Komponenten b) und c)) mit den Gewichtsanteilen<br>a) 89,70 Gew.% der Grundmischung #4<br>b) 10,00 Gew.% des reaktiven Mesogens R#1 und<br>c) 0,30 Gew.% des Photoinitiators Irgacure 651 |
| Orientierungsschicht 31 aus homeotrop orientierendem Polyimid |
| Elektrisch leitfähige Schicht 32 aus ITO |
| Substratschicht 33 aus Glas |

Zur Herstellung der Schaltschicht $S_7$ wird die Grundmischung #4 (Klärpunkt: 81°C, optische Anisotropie: 0,1531, dielektrische Anisotropie: -5,0), das reaktive Mesogen R#1 (von der Fa. Merck unter der Bezeichnung RM82 erhältlich) und der Photoinitiator Irgacure 651 im o.g. Gewichtsverhältnis gemischt und 3 Minuten lang photopolymerisiert.
Das Schaltelement 7 zeigt

- bei einer Spannung von 0 Volt eine diffusive Transmission von 0,3 % und eine Rückwärtsstreuung von 13 % und
- bei einer Spannung von 60 Volt eine diffusive Transmission von 75,5 % und eine Rückwärtsstreuung von 13%.

<u>**Vergleichsbeispiel 8**</u>

Ein Schaltelement 8 enthält eine Schaltschicht $S_8$ in der im Folgenden schematisch dargestellten Schichtabfolge.

| |
|---|
| Substratschicht 28 aus Glas |
| Elektrisch leitfähige Schicht 29 aus ITO |
| Orientierungsschicht 30 aus homeotrop orientierendem Polyimid |
| Schaltschicht $S_8$ bestehend aus nematisch angeordneten Molekülen (Komponente a)) und einem Polymeranteil (Komponenten b) und c)) mit den Gewichtsanteilen<br>a) 89,70 Gew.% der Grundmischung #4<br>b) 5,0 Gew.% des reaktiven Mesogens R#1 (Diacrylat) und<br>c) 3,00 Gew% des reaktiven Mesogens R#2 (Monoacrylat) und<br>d) 2,00 Gew% des reaktiven Mesogens R#3 (Monoacrylat) und<br>e) 0,30 Gew.% des Photoinitiators Irgacure 651 |
| Orientierungsschicht 31 aus Polyimid |
| Elektrisch leitfähige Schicht 32 aus ITO |
| Substratschicht 33 aus Glas |

Zur Herstellung der Schaltschicht $S_8$ wird die Grundmischung #4 (Klärpunkt: 81°C, optische Anisotropie: 0,1531, dielektrische Anisotropie: -5,0), die reaktiven Mesogene R#1, R#2 und R#3 und der Photoinitiator Irgacure 651 im o.g. Gewichtsverhältnis gemischt und 3 Minuten lang photopolymerisiert.
Das Schaltelement 8 zeigt

- bei einer Spannung von 0 Volt eine diffusive Transmission von 1,1 % und eine Rückwärtsstreuung von 14 % und
- bei einer Spannung von 50 Volt eine diffusive Transmission von 82,5 % und eine Rückwärtsstreuung von 13%.

**Patentansprüche**

1. Eine Schaltschicht S für den Einsatz in einem Schaltelement, wobei die Schaltschicht S mindestens zwei Schaltzustände aufweist und

- eine obere Schaltschichtebene oSe und eine untere Schaltschichtebene uSe, und, zwischen oSe und uSe angeordnet,
- ein flüssigkristallines Medium umfasst,

wobei in einem der Schaltzustände parallele Lichtstrahlen, die in Einstrahl-Direktionen D= auf die obere Schaltschichtebene oSe treffen, beim Durchgang durch die Schaltschicht S aus D= abgelenkt werden, sodass nach dem Verlassen der unteren Schaltschichtebene uSe die ursprünglich parallelen Lichtstrahlen in Vorwärtsstreudirektionen $D_<$ von der unteren Schaltschichtebene uSe hinweg und somit vorwärts gestreut werden, wodurch eine Vorwärtsstreuung resultiert, die als diffusive Transmission $T_d$ gemessen wird, wobei $T_d$ > 20% ist, und wobei $T_d$ gemäß der Formel

$$T_d = (I_{\geq 2,5°} / I_g) \cdot 100 \ [\%]$$

definiert ist, worin

$I_{\geq 2,5°}$ die Intensität der Großwinkelstreuung mit Streuwinkeln ≥ 2,5° und
$I_g$ die Intensität der Gesamttransmission bedeuten, **dadurch gekennzeichnet, dass** das flüssigkristalline Medium keinen Polymeranteil umfasst, einen chiralen Dotierstoff enthält und einen Klärpunkt von > 90 °C aufweist.

**2.** Schaltschicht S gemäß Anspruch 1, **dadurch gekennzeichnet, dass** die diffusive Transmission $T_d$ in einem anderen Schaltzustand < 5 % beträgt.

**3.** Schaltschicht S gemäß Anspruch 1 oder 2, **dadurch gekennzeichnet, dass** die Moleküle des flüssigkristallinen Mediums in dem Schaltzustand mit $T_d$ > 20% in einer chiral nematischen Phase vorliegen.

**4.** Schaltschicht S gemäß einem oder mehreren der Ansprüche 1 bis 3, **dadurch gekennzeichnet, dass** die chiral nematische Phase eine in Polydomänen ausgerichtete Phase ist.

**5.** Schaltschicht S gemäß einem oder mehreren der Ansprüche 1 bis 4, **dadurch gekennzeichnet, dass** die Schaltschicht S einen durchschnittlichen Brechungsindex n aufweist, und die Moleküle des flüssigkristallinen Mediums eine Ganghöhe p aufweisen, wobei das Produkt $n \cdot p > 0{,}8$ μm beträgt.

**6.** Schaltschicht S gemäß einem oder mehreren der Ansprüche 1 bis 5, **dadurch gekennzeichnet, dass** der chirale Dotierstoff einen Gewichtsanteil $w_D$ am flüssigkristallinen Medium von 0,1 Gew.% bis 30,0 Gew.% aufweist.

**7.** Schaltschicht S gemäß einem oder mehreren der Ansprüche 1 bis 6 , **dadurch gekennzeichnet, dass** der chirale Dotierstoff ein helikales Drehvermögen $\beta = (p \cdot c)^{-1}$ $\mu m^{-1}$ aufweist, wobei p die Ganghöhe der Moleküle des flüssigkristallinen Mediums in μm und c die Konzentration des chiralen Dotierstoffs in Gew.% bezogen auf das gesamte flüssigkristalline Medium ist, und wobei β größer als 5 $\mu m^{-1}$ ist.

**8.** Schaltschicht S gemäß einem oder mehreren der Ansprüche 1 bis 7, **dadurch gekennzeichnet, dass** sie mindestens einen dichroitischen Farbstoff in einer Farbstoffkonzentration im Bereich von 0,01 Gew.% bis 25 Gew.% bezogen auf das Gewicht des flüssigkristallinen Mediums umfasst.

**9.** Schaltschicht S gemäß einem oder mehreren der Ansprüche 1 bis 8, **dadurch gekennzeichnet, dass** die Schaltschicht S eine Dicke von 3 μm bis 200 μm aufweist, und bei einer Wellenlänge der Lichtstrahlen von 550 nm in dem einen Schaltzustand die Gesamttransmission $T_{gesamt}$ zwischen 60 % und 100 % liegt und die diffusive Transmission $T_d$ zwischen 25 % und 100 % liegt.

**10.** Schaltschicht S gemäß einem oder mehreren der Ansprüche 1 bis 9, **dadurch gekennzeichnet, dass** die Schaltschicht S in allen ihren Schaltzuständen weniger als 45 % der parallelen Lichtstrahlen in Rückwärtsstreudirektionen $D_>$ von der oberen Schaltschichtebene oSe hinweg streut.

**11.** Schaltelement umfassend eine Schaltschicht S gemäß einem oder mehreren der Ansprüche 1 bis 10, wobei die Schaltschicht S in einer ersten Schichtabfolge angeordnet ist, und wobei die erste Schichtabfolge von außen nach innen

- eine äußere Substratschicht,
- eine äußere elektrisch leitfähige Schicht,
- die Schaltschicht S,
- eine innere elektrisch leitfähige Schicht und
- eine innere Substratschicht

umfasst.

**12.** Schaltelement gemäß Anspruch 11, **dadurch gekennzeichnet, dass** es eine oder mehrere Schichten enthält, die UV-Licht blockieren.

**13.** Schaltelement gemäß Anspruch 11 oder 12, **dadurch gekennzeichnet, dass** das Schaltelement auf der äußeren Substratschicht der ersten Schichtabfolge und/oder auf der inneren Substratschicht der ersten Schichtabfolge eine zweite Schichtabfolge aufweist, wobei die zweite Schichtabfolge von außen nach innen

- eine Substratschicht,
- eine elektrisch leitfähige Schicht,
- eine Schaltschicht umfassend ein flüssigkristallines Medium,
- eine elektrisch leitfähige Schicht und
- eine Substratschicht

umfasst.

**14.** Schaltelement gemäß Anspruch 11 oder 12, **dadurch gekennzeichnet, dass** das Schaltelement auf der äußeren Substratschicht der ersten Schichtabfolge und/oder auf der inneren Substratschicht der ersten Schichtabfolge eine dritte Schichtabfolge aufweist, wobei die dritte Schichtabfolge außen nach innen

- eine Substratschicht,
- eine elektrisch leitfähige Schicht,
- eine Schaltschicht umfassend ein flüssigkristallines Medium,
- eine elektrisch leitfähige Schicht,
- eine Substratschicht,
- eine elektrisch leitfähige Schicht,
- eine Schaltschicht umfassend ein flüssigkristallines Medium,
- eine elektrisch leitfähige Schicht und
- eine Substratschicht

umfasst.

**15.** Schaltelement gemäß Anspruch 13 oder 14, **dadurch gekennzeichnet, dass** das flüssigkristalline Medium der Schaltschicht der zweiten Schichtabfolge oder das flüssigkristalline Medium einer oder beider Schaltschichten der dritten Schichtabfolge mindestens einen dichroitischen Farbstoff in einer Farbstoffkonzentration im Bereich von 0,01 Gew.% bis 25 Gew.% bezogen auf das Gewicht des jeweiligen flüssigkristallinen Mediums aufweist.

**16.** Fensterelement umfassend ein Schaltelement gemäß einem oder mehreren der Ansprüche 11 bis 15.

## Claims

**1.** Switching layer S for use in a switching element, where the switching layer S has at least two switching states and comprises

- an upper switching layer plane USLP and a lower switching layer plane LSLP, and, arranged between USLP and LSLP,
- a liquid-crystalline medium,

where, in one of the switching states, parallel light rays which hit the upper switching layer plane USLP in the directions of incidence D= are deflected out of D= on passing through the switching layer S, so that, after leaving

the lower switching layer plane LSLP, the originally parallel light rays are scattered in the forwards-scattering directions $D_<$ away from the lower switching layer plane LSLP and are thus scattered forwards, resulting in forwards scattering, which is measured as diffusive transmission $T_d$, where $T_d$ is > 20%, and where $T_d$ is defined in accordance with the formula

$$T_d = (I_{\geq 2.5°} / I_{tot}) \cdot 100 \ [\%]$$

in which

$I_{\geq 2.5°}$ denotes the intensity of the large-angle scattering with scattering angles ≥ 2.5° and
$I_{tot}$ denotes the intensity of the total transmission, **characterised in that** the liquid-crystalline medium does not include a polymer component, comprises a chiral dopant and has a clearing point of > 90°C.

**2.** Switching layer S according to Claim 1, **characterised in that** the diffusive transmission $T_d$ in another switching state is < 5%.

**3.** Switching layer S according to Claim 1 or 2, **characterised in that** the molecules of the liquid-crystalline medium in the switching state where $T_d$ > 20% are in a chirally nematic phase.

**4.** Switching layer S according to one or more of Claims 1 to 3, **characterised in that** the chirally nematic phase is a phase aligned in polydomains.

**5.** Switching layer S according to one or more of Claims 1 to 4, **characterised in that** the switching layer S has an average refractive index n, and the molecules of the liquid-crystalline medium have a pitch p, where the product n·p is > 0.8 μm.

**6.** Switching layer S according to one or more of Claims 1 to 5, **characterised in that** the chiral dopant has a proportion by weight $w_D$ in the liquid-crystalline medium of 0.1% by weight to 30.0% by weight.

**7.** Switching layer S according to one or more of Claims 1 to 6, **characterised in that** the chiral dopant has a helical twisting power $\beta = (p \cdot c)^{-1}$ $\mu m^{-1}$, where p is the pitch of the molecules of the liquid-crystalline medium in μm and c is the concentration of the chiral dopant in % by weight, based on the entire liquid-crystalline medium, and where β is greater than 5 $\mu m^{-1}$.

**8.** Switching layer S according to one or more of Claims 1 to 7, **characterised in that** it comprises at least one dichroic dye in a dye concentration in the range from 0.01% by weight to 25% by weight, based on the weight of the liquid-crystalline medium.

**9.** Switching layer S according to one or more of Claims 1 to 8, **characterised in that** the switching layer S has a thickness of 3 μm to 200 μm, and, at a wavelength of the light rays of 550 nm in the one switching state, the total transmission $T_{total}$ is between 60% and 100% and the diffusive transmission $T_d$ is between 25% and 100%.

**10.** Switching layer S according to one or more of Claims 1 to 9, **characterised in that**, in all its switching states, the switching layer S scatters less than 45% of the parallel light rays in backwards-scattering directions $D_>$ away from the upper switching layer plane USLP.

**11.** Switching element comprising a switching layer S according to one or more of Claims 1 to 10, where the switching layer S is arranged in a first layer sequence, and where the first layer sequence comprises, from the outside inwards,

- an outer substrate layer,
- an outer electrically conductive layer,
- the switching layer S,
- an inner electrically conductive layer and
- an inner substrate layer.

**12.** Switching element according to Claim 11, **characterised in that** it comprises one or more layers which block UV light.

**13.** Switching element according to Claim 11 or 12, **characterised in that** the switching element has a second layer sequence on the outer substrate layer of the first layer sequence and/or on the inner substrate layer of the first layer sequence, where the second layer sequence comprises, from the outside inwards,

- a substrate layer,
- an electrically conductive layer,
- a switching layer comprising a liquid-crystalline medium,
- an electrically conductive layer and
- a substrate layer.

**14.** Switching element according to Claim 11 or 12, **characterised in that** the switching element has a third layer sequence on the outer substrate layer of the first layer sequence and/or on the inner substrate layer of the first layer sequence, where the third layer sequence comprises, from the outside inwards,

- a substrate layer,
- an electrically conductive layer,
- a switching layer comprising a liquid-crystalline medium,
- an electrically conductive layer,
- a substrate layer,
- an electrically conductive layer,
- a switching layer comprising a liquid-crystalline medium,
- an electrically conductive layer and
- a substrate layer.

**15.** Switching element according to Claim 13 or 14, **characterised in that** the liquid-crystalline medium of the switching layer of the second layer sequence or the liquid-crystalline medium of one or both switching layers of the third layer sequence comprises at least one dichroic dye in a dye concentration in the range from 0.01% by weight to 25% by weight, based on the weight of the respective liquid-crystalline medium.

**16.** Window element containing a switching element according to one or more of Claims 11 to 15.

**Revendications**

**1.** Couche de commutation S destinée à être utilisée dans un élément de commutation, dans laquelle la couche de commutation S présente au moins deux états de commutation et comprend

- un plan de couche de commutation supérieur USLP et un plan de couche de commutation inférieur LSLP, et, agencé entre l'USLP et le LSLP,
- un milieu cristallin liquide,

dans laquelle, dans l'un des états de commutation, des rayons lumineux parallèles qui arrivent en incidence sur le plan de couche de commutation supérieur USLP dans les directions d'incidence D= sont déviés hors de D= lors de leur passage au travers de la couche de commutation S, de telle sorte que, après qu'ils ont quitté le plan de couche de commutation inférieur LSLP, les rayons lumineux originellement parallèles soient diffusés dans les directions de diffusion vers l'avant $D_<$ par éloignement par rapport au plan de couche de commutation inférieur LSLP et soient par conséquent diffusés vers l'avant, ce qui conduit à une diffusion vers l'avant, laquelle est mesurée en tant que transmission de diffusion $T_d$, où $T_d$ est > 20 %, et où $T_d$ est défini conformément à la formule

$$T_d = (I_{\geq 2.5°} / I_{tot}) \cdot 100 \ [\%]$$

dans laquelle

$I_{\geq 25°}$ représente l'intensité de la diffusion grand angle avec des angles de diffusion ≥ 2,5° et
$I_{tot}$ représente l'intensité de la transmission totale, **caractérisée en ce que** le milieu cristallin liquide n'inclut pas un composant polymérique, comprend un dopant chiral et présente un point de clarification > 90°C.

2. Couche de commutation S selon la revendication 1, **caractérisée en ce que** la transmission de diffusion $T_d$ dans un autre état de commutation est < 5%.

3. Couche de commutation S selon la revendication 1 ou 2, **caractérisée en ce que** les molécules du milieu cristallin liquide dans l'état de commutation dans lequel $T_d$ > 20 % sont selon une phase nématique chiralement.

4. Couche de commutation S selon une ou plusieurs des revendications 1 à 3, **caractérisée en ce que** la phase nématique chiralement est une phase alignées en termes de polydomaines.

5. Couche de commutation S selon une ou plusieurs des revendications 1 à 4, **caractérisée en ce que** la couche de commutation S présente un indice de réfraction moyen n, et les molécules du milieu cristallin liquide présentent un pas p, où le produit n·p est > 0,8 μm.

6. Couche de commutation S selon une ou plusieurs des revendications 1 à 5, **caractérisée en ce que** le dopant chiral présente une proportion en poids $w_D$ dans le milieu cristallin liquide de 0,1 % en poids à 30,0 % en poids.

7. Couche de commutation S selon une ou plusieurs des revendications 1 à 6, **caractérisée en ce que** le dopant chiral présente un pouvoir de torsion hélicoïdale $\beta = (p \cdot c)^{-1}$ $\mu m^{-1}$, où p est le pas des molécules du milieu cristallin liquide en μm et c est la concentration du dopant chiral en % en poids, sur la base de la totalité du milieu cristallin liquide, et où β est supérieur à 5 $\mu m^{-1}$.

8. Couche de commutation S selon une ou plusieurs des revendications 1 à 7, **caractérisée en ce qu'**elle comprend au moins un colorant dichroïque selon une concentration en colorant dans la plage de 0,01 % en poids à 25 % en poids, sur la base du poids du milieu cristallin liquide.

9. Couche de commutation S selon une ou plusieurs des revendications 1 à 8, **caractérisée en ce que** la couche de commutation S présente une épaisseur de 3 μm à 200 μm, et, à une longueur d'onde des rayons lumineux de 550 nm dans l'état de commutation considéré, la transmission totale $T_{totale}$ se situe entre 60 % et 100 % et la transmission de diffusion $T_d$ se situe entre 25 % et 100 %.

10. Couche de commutation S selon une ou plusieurs des revendications 1 à 9, **caractérisée en ce que**, dans tous ses états de commutation, la couche de commutation S diffuse moins de 45 % des rayons lumineux parallèles dans des directions de diffusion vers l'arrière $D_>$ par éloignement par rapport au plan de couche de commutation supérieur USLP.

11. Élément de commutation comprenant une couche de commutation S selon une ou plusieurs des revendications 1 à 10, dans lequel la couche de commutation S est agencée au sein d'une première séquence de couches, et dans lequel la première séquence de couches comprend, depuis l'extérieur vers l'intérieur,

    - une couche de substrat externe,
    - une couche électriquement conductrice externe,
    - la couche de commutation S,
    - une couche électriquement conductrice interne, et
    - une couche de substrat interne.

12. Élément de commutation selon la revendication 11, **caractérisé en ce qu'**il comprend une ou plusieurs couche(s) qui bloque(nt) la lumière UV.

13. Élément de commutation selon la revendication 11 ou 12, **caractérisé en ce que** l'élément de commutation comporte une deuxième séquence de couches sur la couche de substrat externe de la première séquence de couches et/ou sur la couche de substrat interne de la première séquence de couches, dans lequel la deuxième séquence de couches comprend, depuis l'extérieur vers l'intérieur,

    - une couche de substrat,
    - une couche électriquement conductrice,
    - une couche de commutation qui comprend un milieu cristallin liquide,
    - une couche électriquement conductrice, et
    - une couche de substrat.

**14.** Élément de commutation selon la revendication 11 ou 12, **caractérisé en ce que** l'élément de commutation comporte une troisième séquence de couches sur la couche de substrat externe de la première séquence de couches et/ou sur la couche de substrat interne de la première séquence de couches, dans lequel la troisième séquence de couches comprend, depuis l'extérieur vers l'intérieur,

- une couche de substrat,
- une couche électriquement conductrice,
- une couche de commutation qui comprend un milieu cristallin liquide,
- une couche électriquement conductrice,
- une couche de substrat,
- une couche électriquement conductrice,
- une couche de commutation qui comprend un milieu cristallin liquide,
- une couche électriquement conductrice, et
- une couche de substrat.

**15.** Élément de commutation selon la revendication 13 ou 14, **caractérisé en ce que** le milieu cristallin liquide de la couche de commutation de la deuxième séquence de couches ou le milieu cristallin liquide d'une couche de commutation ou des deux couches de commutation de la troisième séquence de couches comprend au moins un colorant dichroïque selon une concentration en colorant dans la plage de 0,01 % en poids à 25 % en poids, sur la base du poids du milieu cristallin liquide respectif.

**16.** Élément de vitre ou de fenêtre contenant un élément de commutation selon une ou plusieurs des revendications 11 à 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2014180525 A1
- US 5570210 A
- WO 2014090373 A
- WO 2014187529 A
- EP 13005918
- EP 14002950
- EP 14004145
- WO 2014135240 A
- WO 2014180525 A
- WO 2012052100 A

### In der Beschreibung aufgeführte Nicht-Patentliteratur

- *Applied Physics Letters,* 1999, vol. 74 (26), 3945-3947